(19) Europäisches Patentamt
European Patent Office
Office européen des brevets

(11) EP 0 604 882 B1

(12) **EUROPÄISCHE PATENTSCHRIFT**

(45) Veröffentlichungstag und Bekanntmachung des Hinweises auf die Patenterteilung: **26.08.1998 Patentblatt 1998/35**

(21) Anmeldenummer: **93120597.5**

(22) Anmeldetag: **21.12.1993**

(51) Int. Cl.$^6$: **B01D 71/52**, B01D 71/56, B01D 67/00, C08L 71/00, C08L 77/10

(54) **Semipermeable Membranen aus homogen mischbaren Polymerlegierungen**
Semipermeable membranes made of homogeneous mixable polymeric alloys
Membranes semi-perméables d'alliages polymères miscibles homogènes

(84) Benannte Vertragsstaaten:
**DE FR GB NL**

(30) Priorität: **30.12.1992 DE 4244475**

(43) Veröffentlichungstag der Anmeldung:
**06.07.1994 Patentblatt 1994/27**

(73) Patentinhaber:
**HOECHST AKTIENGESELLSCHAFT**
**65929 Frankfurt am Main (DE)**

(72) Erfinder:
- **Wagener, Reinhard, Dr.**
  **D-65439 Flörsheim am Main (DE)**
- **Helmer-Metzmann, Freddy, Dr.**
  **D-55128 Mainz (DE)**
- **Herrmann-Schönherr, Otto, Dr.**
  **D-64625 Bensheim (DE)**

(74) Vertreter:
**Zounek, Nikolai, Dipl.-Ing. et al**
**Patentsanwaltskanzlei Zounek,**
**Industriepark Kalle Albert,**
**Rheingaustrasse 190**
**65203 Wiesbaden (DE)**

(56) Entgegenhaltungen:
**EP-A- 0 337 626**
**EP-A- 0 382 009**
**WO-A-90/09232**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Xerox (UK) Business Services
2.16.3/3.4

## Beschreibung

Die Erfindung betrifft semipermeable Membranen aus homogen mischbaren Polymerlegierungen sowie ein Verfahren zu ihrer Herstellung

Seit der Einführung asymmetrischer Membranen aus Zelluloseacetat durch Loeb und Sourirajan (S. Sourirajan, Reverse Osmosis, Logos Press, London 1970) und aus hydrophoben Polymerisaten (US-PS 3 615 024) sind zahlreiche Membranen, insbesondere für Separationen von in Wasser gelösten nieder- und makromolekularen Bestandteilen, entwickelt und vorgeschlagen worden, deren Struktur und Eignung in der Literatur angegeben (Desalination, Vol. 35, 5 bis 20, (1980)) und die auch in industrieller Praxis oder für medizinische Zwecke mit Erfolg erprobt wurden.

Viele von den beschriebenen Membranen haben zur Lösung spezifischer Aufgaben besonders vorteilhafte Eigenschaften. Infolge ihres chemischen Aufbaus und ihrer baulichen Struktur können die einzelnen Membranen jeweils nur für ganz spezielle Separationsprobleme optimal geeignet sein. Hieraus resultiert die grundlegende Aufgabenstellung, stets neue Membranen zu entwickeln.

In der EP-A-0 082 433 wird eine übersichtliche Darstellung über die Vor- und Nachteile bereits bekannter Membranen gegeben. So gibt es beispielsweise hydrophile, asymmetrische Membranen aus Zelluloseacetat mit befriedigenden antiadsorptiven Eigenschaften, die aber bezüglich ihrer thermischen und chemischen Beständigkeit sehr zu wünschen lassen. Membranen aus Polysulfonen oder ähnlichen Polymeren besitzen zwar eine gute thermische und chemische Beständigkeit, allerdings besteht bei solchen Membranen wegen der hydrophoben Eigenschaften der eingesetzten Polymeren eine ausgeprägte Neigung, gelöste Stoffe zu adsorbieren, wodurch sich die Membran quasi verstopft. Die in der
EP-A-0 082 433 beschriebenen Mischungen aus Polysulfon und Polyvinylpyrrolidon beseitigen zwar den durch die Hydrophobie des Polysulfons bedingten Nachteil, diese Mischungen sind jedoch gegenüber der Einwirkung von organischen Lösemitteln empfindlich. Hydrophilie und gleichzeitig Resistenz gegenüber Lösemitteln findet man zwar bei Membranen aus Zelluloseregenerat. Diese Membranen sind aber in sauren oder alkalischen Medien relativ leicht hydrolisierbar. Darüber hinaus werden sie von Mikroorganismen leicht angegriffen.

Bei Membranen, die aus Polymermischungen aufgebaut sind, die keine homogen mischbaren Legierungen bilden, können bei Kontakt mit einem Lösungsmittel eine oder mehrere Komponenten der Legierung herausgelöst werden, wodurch sich die Eigenschaften der Membran signifikant verändern können.
Um diesen schwerwiegenden Nachteil zu beheben, ist es also notwendig, homogen mischbare Legierungen herzustellen.

Zwar ist das Prinzip, Polymere zu legieren, um neue Werkstoffe herzustellen, wie sie auf andere Art und Weise, z. B. durch Copolymerisation, nicht oder nur schwierig realisierbar sind, weit verbreitet, allerdings ist man bis heute weit davon entfernt, die Eigenschaften einer Legierung aus den Eigenschaften der Einzelkomponenten vorhersagen zu können. Daher bleibt das Legieren von Polymeren noch weitgehend empirisch (Olabisi, Robeson, Shaw: Polymer-Polymer-Miscibility, Academic Press, New York 1979, S. 321 bis 327). Insbesondere ist die homogene Mischbarkeit oder Kompatibilität von Legierungen, speziell von solchen aus stark wechselwirkenden Polymeren, trotz einer sehr großen Zahl von experimentellen und theoretischen Arbeiten auf diesem Gebiet nicht vorhersehbar (Journal of Polymer Science, Polymer Physics Edition, Vol. 21, S. 11 (1983)). Die vollständige Mischbarkeit ist also eine ungewöhnliche Eigenschaft in Polymermischungen, die normalerweise dazu tendieren, Mehrphasensysteme auszubilden (Polymer, Vol. 24, S. 60 (1983)). Selbst moderne thermodynamische Theorien waren bis zu diesem Zeitpunkt nur begrenzt erfolgreich, was die Vorhersage der Mischbarkeit betrifft. Es wurde daher bezweifelt, daß irgendeine praktische Theorie entwickelt werden kann, welche die realen Komplexitäten berücksichtigt, die die Natur den Polymer-Polymer-Wechselwirkungen verleiht (Macromolecules, Vol. 16, S. 753 (1983)).

Membrane aus einer homogen mischbaren Polymerlegierung, die aromatische Polyamide und Poly-N-vinylpyrrolidon enthält, werden in der Anmeldung EP-A-0 382 009 beschrieben. Die Hydrophilie dieser Membrane kann jedoch, beispielsweise durch die Einführung geladener Gruppen in die membranbildende Polymerlegierung, noch weiter verbessert werden. Membrane aus einer Polymerlegierung, die aus einem teilaromatischen Polyamid ($^{(R)}$Trogamid T) und einem sulfonierten Polyetherketon bestehen, werden in der zurückgezogenen europäischen Patentanmeldung EP-A-O 337 626 beschrieben. Die chemische Stabilität dieser Membrane ist jedoch bereits gegenüber mäßig polaren organischen Lösemitteln sehr unbefriedigend.

Der Erfindung liegt die Aufgabe zugrunde, semipermeable Membranen bereitzustellen, die ausgeprägte hydrophile Eigenschaften besitzen, d. h. befähigt sind, erhebliche Mengen Wasser, bezogen auf ihr Gesamtgewicht, aufzunehmen, die gegen verseifende Agentien, sowie gegenüber thermischer Einwirkung beständig sind, die organischen Lösemitteln besser widerstehen als Membranen aus hydrophoben Polymerisaten, die eine geringe Proteinadsorption zeigen, die eine gute Benetzbarkeit aufweisen und die auch gegenüber der Einwirkung von Mikroorganismen unempfindlich ist.

Gelöst wird diese Aufgabe durch Bereitstellung einer Membran, die aus einer homogenen Polymerlegierung aufgebaut ist, die als Hauptbestandteile sulfonierte, aromatische Polyetherketone und mindestens ein Polyamid enthält

und bei der das Polyamid ein vollaromatisches Polyamid ist. Ein vollaromatisches Polyamid leitet sich formal ab von einer aromatischen Dicarbonsäure und einem aromatischen Diamin. Die erfindungsgemäße Membran kann auch aus einer homogenen Polymerlegierung bestehen, die neben sulfoniertem, aromatischen Polyetherketon und vollaromatischem Polyamid in geringerem Maße noch weitere Polymere enthält. Die Legierungen, aus denen die erfindungsgemäßen Membranen aufgebaut sein könnten, sind vorzugsweise frei von teilaliphatischen Polyamiden gemäß EP-A-337 626.

Nach einer Ausgestaltung der Erfindung besteht die Membran aus einer Polymerlegierung, die aus mindestens einem sulfonierten, aromatischen Polyetherketon und mindestens einem vollaromatischen Polyamid besteht. Neben dem sulfonierten, aromatischen Polyetherketon und dem vollaromatischen Polyamid können - nach einer Ausgestaltung der Erfindung - noch geringere Mengen an Poly-N-vinyl-2-pyrrolidon vorhanden sein. Zusätzlich zu dem Poly-N-vinyl-2-pyrrolidon kann in der Polymerlegierung der erfindungsgemäßen Membran noch ein Copolymerisat enthalten sein, das aus den Monomeren N-Vinyl-2-pyrrolidon und Vinylacetat aufgebaut ist. Nach einer anderen Ausgestaltung der Erfindung ist in der Polymerlegierung der erfindungsgemäßen Membran neben dem sulfonierten, aromatischen Polyetherketon und dem vollaromatischen Polyamid noch ein Copolymerisat aus N-Vinyl-2-pyrrolidon und Vinylacetat vorhanden (aber kein Poly-N-vinyl-2-pyrrolidon).

Soweit die Polymerlegierung der erfindungsgemäßen Membran aus einem sulfonierten, aromatischen Polyetherketon und einem vollaromatischen Polyamid besteht, ist jede der beiden Bestandteile in einer Menge von 1 bis 99 Gew.-% vorhanden. Insbesondere enthalten die Legierungen 5 bis 60, bevorzugt 15 bis 50 Gew.-% eines sulfonierten aromatischen Polyetherketons und 30 bis 90, bevorzugt 40 bis 75 Gew.-% eines aromatischen Polyamids.

Soweit die Polymerlegierung noch Poly-N-vinyl-2-pyrrolidon und/oder ein Copolymerisat aus N-Vinyl-2-pyrrolidon und Vinylacetat enthält, ist es vorteilhaft, wenn der Anteil an sulfoniertem, aromatischen Polyetherketon 5 bis 60 Gew.-% und der Anteil des vollaromatischen Polyamids 20 bis 90 Gew.-% beträgt. Vorzugsweise beträgt der Anteil an Polyvinylpyrrolidon und/oder einem Copolymerisat aus N-Vinyl-2-pyrrolidon und Vinylacetat 0,1 bis 30 Gew.-%.

Es ist vorteilhaft, wenn die sulfonierten, aromatischen Polyetherketone aus Wiederholeinheiten der allgemeinen Formel I,

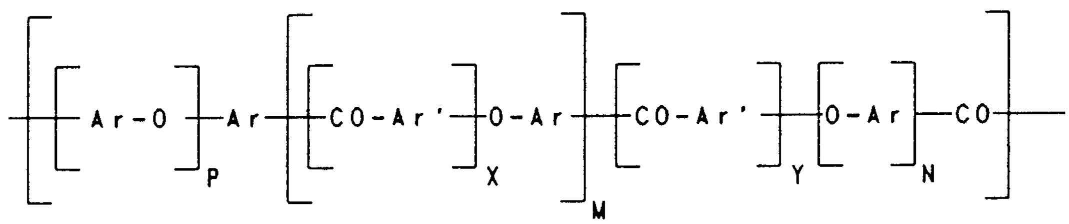

(I)

aufgebaut sind, wobei

| | |
|---|---|
| Ar | einen Phenylenring mit para- und/oder meta-Bindungen, |
| Ar'- | einen Phenylen-, Naphthylen-, Biphenylen-, Anthrylen- oder eine andere zweiwertige aromatische Einheit, |
| X, M und N | unabhängig voneinander Null oder 1, |
| Y | Null, 1, 2 oder 3, |
| p | 1, 2, 3 oder 4, |

bedeuten, und wobei in der allgemeinen Formel I 20 bis 100 % der O-Phenylen-O- Einheiten mit einer $SO_3H$-Gruppe substituiert sind vorausgesetzt, daß X, M, N und Y nicht gleichzeitig Null sind, wenn p = 1. Vorzugsweise werden in der allgemeinen Formel I die Indizes p, X und M so aufeinander abgestimmt, daß $p = 2 - (1 - X) \cdot M$ gilt.

Bevorzugt eingesetzt werden sulfonierte Polyetherketone der allgemeinen Formel II,

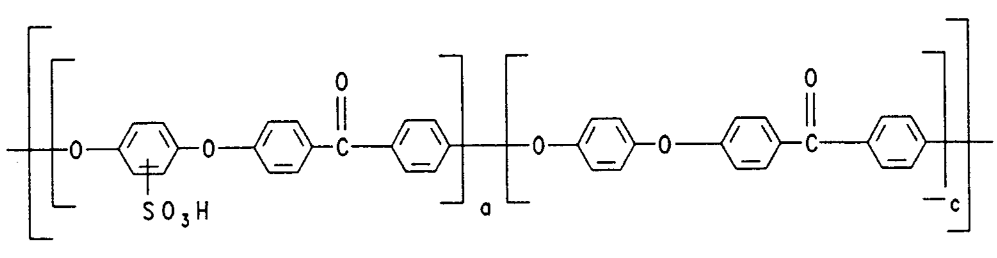

(II)

wobei a eine Zahl von 0,2 bis 1, c eine Zahl von 0 bis 0,8 bedeutet und die Summe $a + c = 1$ beträgt, der allgemeinen Formel III

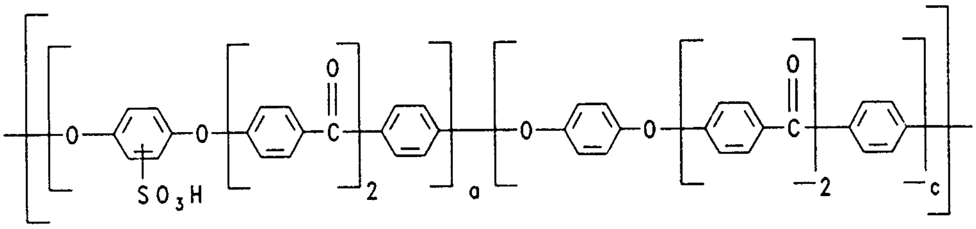

(III)

wobei a eine Zahl von 0,2 bis 1, c eine Zahl von 0 bis 0,8 bedeutet und die Summe $a + c = 1$ beträgt, und der allgemeinen Formel IV

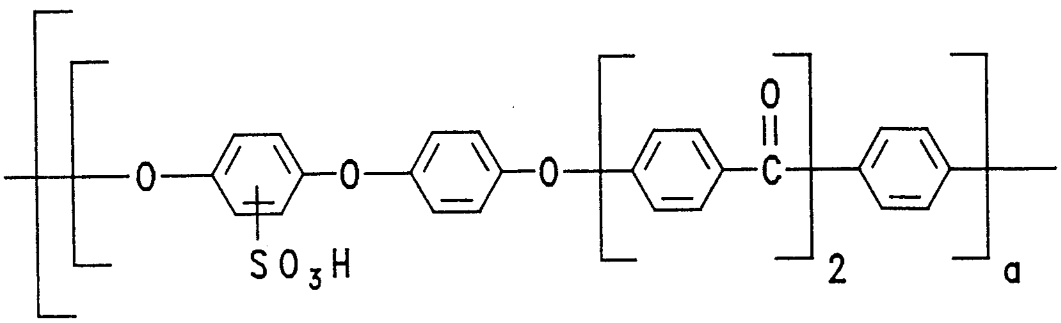

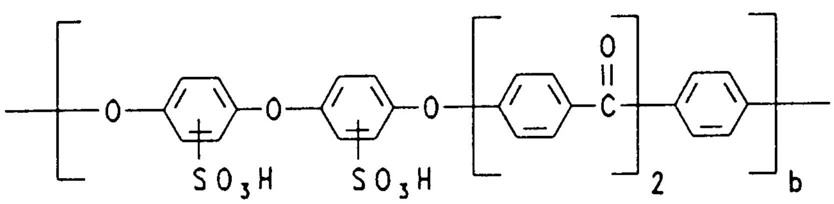

(IV)

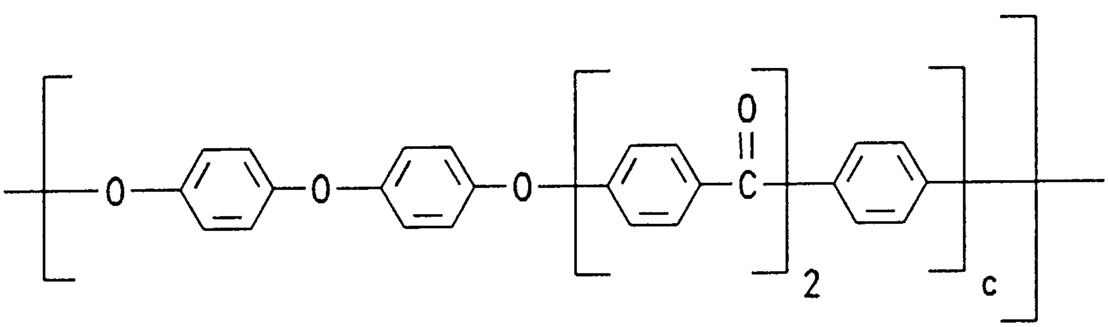

wobei a eine Zahl von 0 bis 1, b eine Zahl von 0 bis 1, c eine Zahl von 0 bis 0,5 bedeutet, und die Summe $a + b + c = 1$ beträgt.

Darüber hinaus können auch sulfonierte Polyetherketone eingesetzt werden, die aus mindestens zwei unterschiedlichen Wiederholeinheiten der allgemeinen Formeln II, III und IV zusammengesetzt sind.

Man kann sie herstellen durch Copolymerisation von Einheiten der allgemeinen Formel II, III, IV (jedoch frei von Sulfonsäuregruppen) und nachträglicher Sulfonierung des gewonnenen Copolymeren.

Die eingesetzten sulfonierten Polyetherketone besitzen vorzugsweise Molmassen, angegeben als Gewichtsmittel, im Bereich von 10 000 bis 60 000 g/mol, insbesondere im Bereich von 20 000 bis 30 000 g/mol.

Die Herstellung von sulfonierten Polyetherketonen kann nach einem üblichen Sulfonierungsverfahren erfolgen (z.B. EP-A0-008 895, EP-A0-041 780). Vorzugsweise wird nach dem in der europäischen Patentanmeldung EP-A0 575 807 beschriebenen Verfahren sulfoniert.

Die erfindungsgemäße Membran kann aus einer Polymerlegierungen aufgebaut sein, die als vollaromatisches Copolyamid vorzugsweise mindestens eines enthält, das Struktureinheiten der allgemeinen Formel (V)

$$-HN-Ar^2-Z^1-Ar^3-(-Z^2-Ar^3-Z^3-Ar^2-)_n-NH-OC-Ar^1-CO- \qquad (V)$$

aufweist, wobei

$-Ar^1-$ einen 1,4-Phenylen- oder einen anderen zweiwertigen ($C_6$-$C_{12}$)-aromatischen oder heteroaromatischen, gegebenenfalls Sulfonsäuregruppen oder Etherbrücken enthaltenden Rest, der gegebenenfalls mit einem oder zwei verzweigten oder unverzweigten $C_1$-$C_4$-Alkyl- oder Alkoxyresten oder mit einem oder mehreren Halogenatomen, beispielsweise Chlor, Fluor oder Brom substituiert ist, bedeutet,

$-Ar^2-$ und $-Ar^3-$ für gleiche oder verschiedene 1,2-Phenylen, 1,3-Phenylen- oder 1,4-Phenylenreste, die gegebenenfalls mit einem oder zwei verzweigten oder unverzweigten $C_1$-$C_4$-Alkyl- oder Alkoxyresten oder mit einem oder mehreren Halogenatomen, beispielsweise Chlor, Fluor oder Brom substituiert sind, stehen,

$-Z^1-$, $-Z^2-$ und $-Z^3-$ unabhängig voneinander eine direkte Bindung oder einen der folgenden zweiwertigen Reste -O-, $-C(CH_3)_2-$, $-C(CF_3)_2-$, $-SO_2-$ oder $-O-Ar^2-O-$ bedeuten, wobei $Z^1$ auch die Bedeutung $-Ar^2-$ die vorstehend genannte Bedeutung hat, und

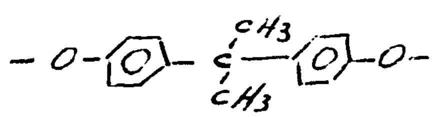

n eine ganze Zahl ist, insbesondere n = 0, 1 oder 2, ist.

Bevorzugt sind Copolyamide, der allgemeinen Formel V die die Struktureinheit

(A) $-OC-Ar^1-CO-$,
sowie drei verschiedene Struktureinheiten der Formeln
(B) $-NH-Ar^2-NH-$ und
(D) $-HN-Ar^2-Z^1-Ar^3-(-Z^2-Ar^3-Z^3-Ar^2-)_n-NH-$

aufweisen, wobei jeweils mindestens eine Struktureinheit B und D vorhanden sein soll und $Ar^2$ in B und D eine unterschiedliche Bedeutung haben kann. Vorzugsweise ist dabei n = 0.

Beispiele für die Einheit $-Ar^1-$ in der Wiederholungseinheiten A sind

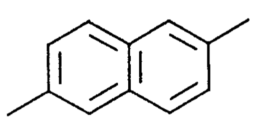 , 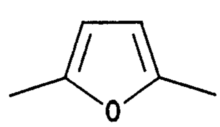 ,

insbesondere

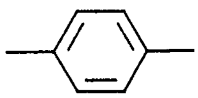 und 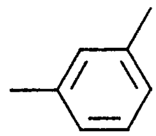 .

Beispiele für -$Ar^2$- in den Wiederholungseinheiten B sind substituierte oder unsubstituierte p-Phenyleneinheiten, wie z.B.

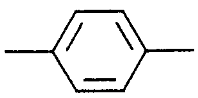 , 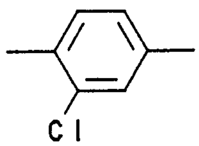 , 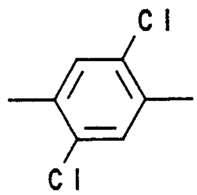 oder 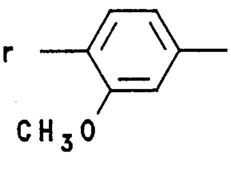 ,

substituierte oder unsubstituierte m-Phenyleneinheiten, wie z.B.

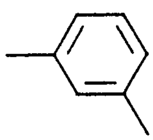 , 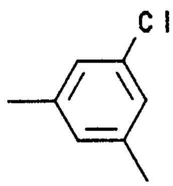 oder 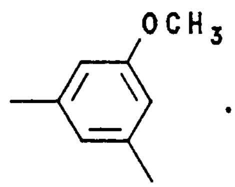 .

Beispiele für $Ar^2$-$Z^1$-$Ar^3$ in den Wiederholungseinheiten D sind:

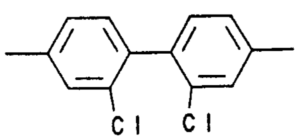 , 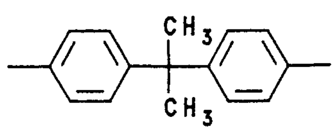 , 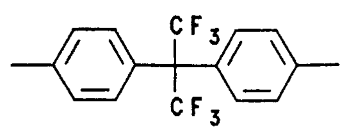 ,

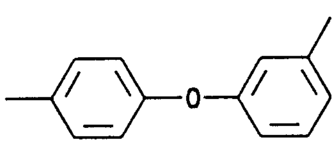 und 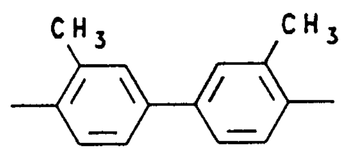 .

Besonders bevorzugt sind:

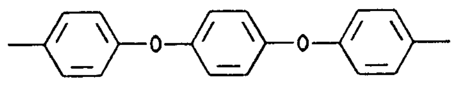 und 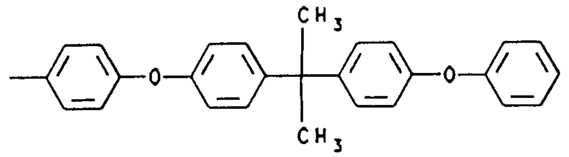 .

Vorzugsweise sind in dem vollaromatischen Copolyamid die Struktureinheiten A, B und D in den Molverhältnissen B/A = 0,3 - 0,9 und D/A = 0,1 - 0,7 vorhanden und das Molverhältnis (B + D)/A beträgt 0,9 bis 1,1.

Bei der Synthese der vollaromatischen Copolyaramide mit den Struktureinheiten A, B, und D werden die für die Struktureinheiten (B) und (D) erforderlichen eingesetzten Diamine B', B'', D' und D'' meist in den folgenden Konzentrationen eingesetzt:

| | |
|---|---|
| Diamin (B'): | 0 bis 50 mol% |
| zweites Diamin (B''): | 0 bis 60 mol% |
| Diamine (D',D''): | 10 bis 70 mol% |
| | (pro Diamineinheit (D') oder (D'')), |

bezogen auf 100 mol% der eingesetzten Säurekomponente (A'), wobei das Molverhältnis der Diaminkomponenten zur Säurekomponente 0,90:1,10 bis 1,10:0,90, vorzugsweise 1:1, beträgt.

Die Herstellung der hier genannten Copolyamide kann erfolgen durch Lösungskondensation der aromatischen Disäurechloride mit den Mischungen der aromatischen Diamine, analog wie in den europäischen Patentanmeldungen EP-A-0 199 090, EP-A-0 322 837, EP-A-0 445 673, EP-A-0 499 230, EP-A-0 522 418 und EP-A-0 553 755 beschrieben, in aprotischen, polaren Lösungsmitteln vom Amidtyp, wie z.B. in N,N-Dimethylacetamid oder insbesondere in N-Methyl-2-pyrrolidon. Gegebenenfalls können diesen Lösungsmitteln in bekannter Weise zur Erhöhung der Lösefähigkeit bzw. zur Stabilisierung der Polyamidlösungen Halogenidsalze der ersten und zweiten Gruppe des periodischen Systems zugegeben werden. Bevorzugte Zusätze sind Calciumchlorid und/oder Lithiumchlorid.

Die inhärente Viskosität, welche ein Maß für die mittlere Kettenlänge der entstandenen Polymere ist, liegt bei den als Legierungskomponenten verwendeten Copolyamiden vorzugsweise zwischen 50 und 1000 $cm^3/g$, bevorzugt zwischen 100 und 500 $cm^3/g$, besonders bevorzugt zwischen 150 und 350 $cm^3/g$. Sie wurde bestimmt an Lösungen von jeweils 0,5 g Polymer in 100 ml 96 %iger Schwefelsäure bei 25°C.

Die Molekulargewichte des Polyvinylpyrrolidons (= PVP) und des Copolyvinylpyrrolidon-polyvinylacetats (abgekürzt: CoPVPAc), den möglichen weiteren Komponenten der erfindungsgemäßen homogenen Polymerlegierungen, liegen, angegeben als Gewichtsmittel, meist bei 1000 bis 3 Millionen, vorzugsweise bei 20 000 bis 200 000, insbesondere bei 40 000 bis 100 000.

Die homogen Polymerlegierungen der erfindungsgemäßen Membrane können aus einer gemeinsamen Lösung, die mindestens ein Polyetherketon oder mindestens ein sulfoniertes Polyetherketon, mindestens ein Polyaramid und Polyvinylpyrrolidon und/oder CoPVPAc enthält, in einem aprotischen organischen Lösemittel, z.B. Dimethylformamid, Dimethylsulfoxid, N-Methylpyrrolidon oder N,N-Dimethylacetamid, hergestellt werden. Dazu kann beispielsweise das Polyaramid im entsprechenden Lösemittel polykondensiert, das sulfonierte Polyetherketon (und gegebenenfalls Polyvinylpyrrolidon und/oder CoPVPAc) in geeigneter Konzentration gelöst und anschließend eine Mischung der jeweiligen Polymerlösungen im berechneten Mengenverhältnis hergestellt werden.

Gegebenenfalls können diesen Lösungsmitteln in bekannter Weise zur Erhöhung der Löslichkeit bzw. zur Stabilisierung der Polyamidlösungen Halogenidsalze der ersten und zweiten Gruppe des Periodensystem zugegeben werden. Das Verfahren zur Herstellung der homogenen Polymerlegierungen der erfindungsgemäßen Membrane wird näher beschrieben in der prioritätsgleichen europäischen Patentanmeldung EP-A-0 604 881 "Polymerlegierungen auf der Basis von sulfonierten, aromatischen Polyetherketonen".

Alternativ dazu kann sulfoniertes Polyetherketon (und gegebenenfalls Polyvinylpyrrolidon und/oder CoPVPAc) in trockener Form direkt in die Polyaramidlösung nach Abschluß der Polykondensation gegeben werden.

Zur Herstellung der ternären Legierung ist die Polykondensation des Polyaramids in Gegenwart von Polyvinylpyrrolidon oder CoPVPAc und anschließender Zugabe von sulfoniertem Polyetherketon in Lösung oder in trockener Form bevorzugt.

Bezüglich der Herstellung der quartären Legierung ist die Polykondensation des Polyaramids in Gegenwart von Polyvinylpyrrolidon und CoPVPAc und anschließender Zugabe von sulfoniertem Polyetherketon in Lösung oder in trokkener Form bevorzugt.

Besonders bevorzugt wird ein Verfahren, bei dem die Polykondensation zur Herstellung des Polyaramids in Gegenwart des sulfonierten Polyetherketons und gegebenenfalls in Gegenwart von Polyvinylpyrrolidon und/oder CoPVPAc durchgeführt wird.

Zur Herstellung der erfindungsgemäßen Membrane aus den Legierungen wird die bereits beschriebene Lösung der Legierung filtriert und entgast. In bekannter Weise wird nach dem Phasenversionsverfahren (Robert E. Kesting, "Synthetic Polymeric Membranes", $2^{nd}$Ed., 1985, S. 237 ff.) eine asymmetrische Membran hergestellt. Zu diesem Zweck wird die Polymerisatlösung auf eine möglichst plane Unterlage als flüssige Schicht ausgebreitet. Die plane Unterlage kann beispielsweise aus einer Glasplatte oder aus einer Metalltrommel bestehen.

Danach läßt man auf die flüssige Schicht Fällflüssigkeit einwirken, die mit dem Lösungsmittel der Lösung mischbar ist, in der aber die in der Polymerisatlösung gelösten Polymerisate als Membran ausgefällt werden. Die Legierungs-Lösemittel enthalten beispielsweise N,N-Dimethylacetamid, N,N-Dimethylformamid, Dimethylsulfoxid oder insbesondere N-Methyl-2-pyrrolidon, als Hauptbestandteil.
Als weitere Lösemittelbestandteile kommen leichtflüchtige Substanzen, wie beispielsweise Tetrahydrofuran, Aceton oder Methylenchlorid in Frage.

Als Fällflüssigkeit kommen Wasser, ein- oder mehrwertige Alkohole wie Methanol, Ethanol, Isopropanol, Ethylenglykol oder Glycerin in Frage, darüber hinaus Mischungen dieser Substanzen untereinander oder mit aprotischen, polaren Lösemitteln, wie N,N-Dimethylformamid, N,N-Dimethylacetamid, Dimethylsulfoxid, insbesondere aber mit N-Methyl-2-pyrrolidon. Durch die Einwirkung der Fällflüssigkeit auf die flüssige Schicht aus Polymerlösung wird die gelöste Polymerlegierung unter Ausbildung einer makroporösen Membran mit asymmetrischer Porenstruktur ausgefällt. Bei der Verfahrensdurchführung läßt man die Fällflüssigkeit vorteilhaft so lange auf die ausgefällte Membran einwirken, bis aus dieser mehr als 99 Gew.-% des ursprünglichen in der frischgefällten Membran vorhandenen Lösemittels durch Fällflüssigkeit ersetzt ist. Danach wird die gebildete Membran von der Fällflüssigkeit befreit, beispielsweise dadurch, daß man die Membran direkt in einem Luftstrom mit einer relativen Luftfeuchtigkeit im Bereich von 20 bis 100 % trocknet oder aber zunächst mit einem Weichmacher wie Glycerin behandelt und danach trocknet. Wird die ausfällte Membran mit Glycerin getränkt, so kann sie vorzugsweise im Bereich von 5 bis 60 % Glycerin, bezogen auf ihr Gesamtgewicht, enthalten; die derart imprägnierte Membran wird getrocknet, z. B. bei einer Temperatur im Bereich von 30 bis 80 °C.

Die Trennleistung bzw. das Rücknaltevermögen der erfindungsgemäßen Membranen läßt sich durch eine nachträgliche Behandlung der frischgefällten Membran bei einer Temperatur im Bereich von 60 bis 120 °C mit einer Flüssigkeit, beispielsweise Wasser, ein- oder mehrwertigen Alkoholen, oder mit den bereits genannten polar aprotischen oder polar protischen Lösemitteln, beispielsweise vom Amidtyp, oder Mischungen dieser Flüssigkeiten untereinander oder auch durch eine Behandlung mit gegebenenfalls überhitztem Wasserdampf (> 100°C), gezielt variieren.

Zur Herstellung von Membranen, die auf einer Trägerschicht angeordnet sind, welche für strömungsfähige Medien durchlässig ist, geht man wie vorstehend angegeben vor, verwendet jedoch als Unterlage zur Ausbildung der Membranschicht als Träger für diese ein Vlies, z.B. aus Kunststoff oder Papier und beläßt nach Ausbildung der Membranschicht diese auf einer Unterlage. Die Membran kann aber auch zunächst trägerfrei hergestellt und erst danach auf einen durchlässigen Träger aufgebracht werden. Die Dicke der erfindungsgemäßen Membrane ohne Trägerschicht liegt im Bereich von 10 bis 300 μm, insbesondere im Bereich von 20 bis 120 μm.

In bekannter Weise sind aus der Lösung der Legierungen auch Hohlfasern bzw. Kapillaren herstellbar, indem man die Lösung der Polymerlegierung nach dem Stand der Technik durch eine entsprechend ausgebildete formgebende Ringspalt- bzw. Hohlnadeldüse in Fällflüssigkeit einspinnt. Die Wandstärke derartiger Kapillaren oder Hohlfasern liegt im Bereich von 20 bis 500 μm, insbesondere aber zwischen 150 und 350 μm.

Die erfindungsgemäße Membran eignet sich außer für die dem Fachmann bekannten Standardanwendungen poröser Membranen, wie Druckfiltration (Mikro-, Ultra- und Nanofiltration), Diafiltration und Dialyse ebenfalls als Trägermembran für permselektive Schichten, die direkt auf oder in der Membran erzeugt werden. So können beispielsweise "ultradünne" Schichten ($\leq$ 1 μm) aus Polymeren mit funktionellen Gruppen (z.B. Silikone, Zelluloseäther, Fluorcopolymere) auf Wasser gespreitet werden, von dort auf die Membranoberfläche aufgebracht und, z.B. durch Reaktion mit einem Diisocyanat, kovalent fixiert werden, um somit höhere Permselektivität zu erzielen. Analog eignen sich die erfindungsgemäßen Membranen auch als Träger reaktiver Moleküle, beispielsweise um Enzyme oder Antikoagulantien wie Heparin, nach dem Stand der Technik zu fixieren.

Die Erfindung wird durch die nachfolgenden Beispiele näher erläutert.

Beispiele

Beispiel 1

Für die Herstellung der Membran wurde in N-Methyl-2-pyrrolidon (NMP) als Lösemittel ein Copolyamid aus

(A') 100 mol % Terephthalsäuredichlorid

(B') 25 mol % Paraphenylendiamin
(D') 50 mol % 3,3'-Dimethyl-4,4'-diaminobiphenyl
(D") 25 mol % 1,4-Bis(4-aminophenoxy)benzol

bei einer Temperatur von 70°C hergestellt. Die Konzentration der Lösung betrug 6 (Gewichtsteile bezogen auf 100 Gewichtsteile der Lösung). Als zweite Legierungskomponente wurde ein sulfoniertes Polyetherketon der Formel:

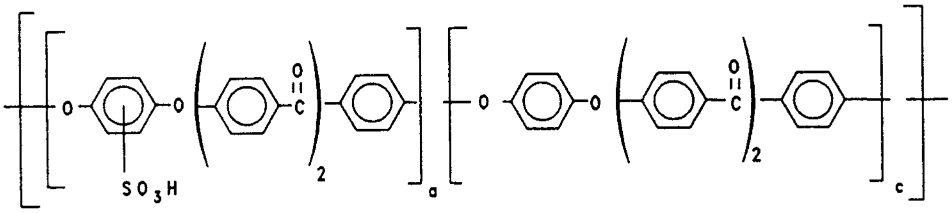

(VI)

durch Sulfonierung in $SO_3$-haltiger, konzentrierter Schwefelsäure hergestellt. Die Reaktionsbedingungen wurden so gewählt, daß c = 0,28 und a = 0,72, d. h. die Ionenaustauschkapazität des sulfonierten Polymers betrug 1,4 bis 1,6 meq/g.
Drei Gramm des ausgefällten und getrockneten sulfonierten Polyetherketons wurden in 100 g der oben beschriebenen Polyamidlösung eingerührt, bis eine klare, homogene Lösung der Polymerlegierung entstand.
Diese Lösung wurde in einer Schichtdicke von 200 µm auf ein Polypropylen-Trägervlies aufgebracht und in Wasser bei 20°C koaguliert.

Die hydraulische Permeabilität (Ultrafiltration) und das Rückhaltevermögen der Membran gegenüber gelösten Makromolekülen wurden bei Drücken von 3,0 bar bei 20°C in einer gerührten zylindrischen Zelle bestimmt (500 U/min, 250 ml, Membranfläche 38 $cm^2$). Das Rückhaltevermögen ist definitionsgemäß

$$R = \frac{C_1 - C_2}{C_1} \cdot 100\ [\%]$$

$C_1$ ist die Konzentration der wäßrigen Testlösung,
$C_2$ ist die Konzentration im Permeat.

Als Testlösung wurde eine 2 %ige wäßrige Polvvinylpyrrolidonlösung (PVP) eingesetzt, erhältlich unter dem "$^R$Kollidon K30" der Firma BASF (PVP K30). Die Molmasse des Polyvinylpyrrolidons betrug 49 000 Dalton. Des weiteren wurden 1 %ige Lösungen fraktionierter Dextrane mit Molmassen 10 000, 40 000 und 70 000 Dalton verwendet, erhältlich unter dem Namen Dextran T10, Dextran T40 bzw. Dextran T70 von der Firma Pharmacia. Es werden ebenfalls 1 %ige wäßrige Lösungen der Salze NaCl und $Na_2SO_4$ als Testlösungen eingesetzt. Die Konzentrationen der Testlösungen sowie der Permeate wurden durch Messung der Dichte der wäßrigen Lösungen bestimmt. Die Dichtemessungen erfolgten mit einem Dichtemeßgerät $^R$DA 210 der Firma Kyoto Electronics. Außerdem wurde als Testlösung ein 0,15 %ige Lösung von Rinderalbumin (BSA, Sigma A 6793) mit einer Molmasse von 69 000 Dalton in einer $Na_2HPO_4/H_3PO_4$ -Pufferlösung von pH = 7,5 verwendet. Die Konzentrationsbestimmung der Albumin-Lösungen wurde UV-spektralphotometrisch bei einer Wellenlänge von 278 nm durchgeführt.

Die hydraulische Permeabilität der Membran ergab sich zu 500 $l/m^2h$. Der Rückhalt für PVP K30 betrug R = 90 %, diejenigen für Dex. T40 R = 42 % und für Dex. T10 R = 17%.
Eine Probe der Membran wurde in einem Ultrafiltrationsexperiment mit einer Lösung von Rinderalbumin beaufschlagt. Der Permeatfluß betrug unter den oben genannten Bedingungen anfangs 220 $l/m^2h$ und war nach 1 h Dauer des Filtrationsexperimentes auf einen stationären Wert von 175 $l/m^2h$ abgesunken. Das Rückhaltevermögen der Membran für Rinderalbumin wurde zu $R \geq 99\%$ bestimmt.
Eine weitere Probe der Membran wurde 24 h lang bei 20°C in eine Rinderalbumin-Probelösung eingelegt. Nach dieser Behandlung wurde eine hydraulische Permeabilität von 380 $l/m^2h$ der Membran gemessen.

Vergleichsbeispiel 2:

Für die in diesem Beispiel beschriebene Membran wurde die in Beispiel 1 hergestellte Polyaramidlösung, jedoch ohne den Zusatz von sulfoniertem Polyetherketon verwendet. Die Polymerlösung wurde ebenfalls in einer Schichtdicke von 200 µm auf ein Polypropylen-Trägervlies aufgebracht und in Wasser bei 20°C koaguliert.

Die hydraulische Permeabilität wurde unter den in Beispiel 1 beschriebenen Bedingungen zu 200 $l/m^2h$ bestimmt. Der Rückhalt für PVP K30 betrug R = 88 %, diejenigen für Dex. T 40 R = 45 % und für Dex. T10 R = 12 %. Es wurde ebenso wie in Beispiel 1 ein Ultrafiltrationsexperiment mit Rinderalbumin durchgeführt. Der anfängliche Permeatfluß betrug 190 $l/m^2h$, der stationäre Permeatfluß nach 1 h Versuchsdauer 150 $l/m^2h$. Der Rückhalt der Membran für Rinderalbumin war R $\geq$ 99 %.

Eine Probe der Membran wurde 24 h lang bei 20°C in eine Rinderalbumin-Probelösung eingelegt. Danach hatte die hydraulische Permeabilität auf 120 $l/m^2h$ abgenommen.

Beispiel 3:

Ein Teil der in Beispiel 1 präparierten Lösung der Polymerlegierung wurde auf einem Polyphenylensulfid-Trägervlies ausgestrichen und bei 20°C in Wasser koaguliert. Die so hergestellte Membran wurde einer zehnminütigen Behandlung bei 100°C in einem Gemisch aus 50 Teilen Wasser und 50 Teilen NMP unterzogen. Gemäß dem in Beispiel 1 beschriebenen Verfahren wurde nun eine hydraulische Permeabilität von 100 $l/m^2h$ sowie Rückhaltevermögen für PVP K30 von R = 99 % für Dex. T40 von R = 98 % und für Dex. T10 von R = 97 % bestimmt.

Zwei Proben der Membran wurden zwecks Austausch der Porenflüssigkeit in Aceton eingelegt. Die Aceton - feuchten Membrane wurden dann 24 h lang bei 20°C in Aceton bzw. Chloroform aufbewahrt. Keine der beiden Membrane zeigte Anzeichen einer Zerstörung durch das jeweilige Lösemittel in Form starker Quellung oder ausgeprägten Schrumpfes. Die Lösemittel wurden anschließend gegen Aceton und wieder Wasser ausgetauscht und die Trennleistung der Membrane erneut untersucht:

- nach Behandlung in Chloroform:
  hydraulische Permeabilität: 60 $l/m^2h$
  Rückhaltevermögen für Dex. T10: R = 93%
- nach Behandlung in Aceton:
  hydraulische Permeabilität: 100 $l/m^2h$
  Rückhaltevermögen für Dex. T10: R = 95%

Vergleichsbeispiel 4:

Zur Präparation der in diesem Beispiel untersuchten Membran wurde eine Lösung enthaltend 30 g eines teilaromatischen Polyamids ($^R$Trogamid T, Hüls AG) und 15 g des in Beispiel 1 beschriebenen sulfonierten Polyetherketons in 155 g NMP angesetzt und unter Rühren homogenisiert. Die Lösung dieser Legierung wurde ebenfalls auf einem Polyphenylensulfid-Trägervlies ausgestrichen und in Wasser bei 20°C koaguliert. So wie in Beispiel 1 beschrieben wurde eine hydraulische Permeabilität von 220 $l/m^2h$ sowie ein Rückhaltevermögen für PVP K30 von R = 92 % bestimmt. Die Porenflüssigkeit Wasser wurde gegen Aceton ausgetauscht und zwei Proben der Membran 24 h lang bei 20°C in Aceton bzw. Chloroform aufbewahrt. Beim Einlegen der Membranproben in diese Lösemittel konnte bereits eine Änderung der Membranmorphologie beobachtet werden.

Anschließend wurden die Membranen wieder auf Wasser rekonditioniert. Die Charakterisierung ergab, daß die Membrane irreversibel geschädigt waren und nur noch geringes Rückhaltevermögen für PVP K30 aufwiesen:

- nach Behandlung in Chloroform:
  Rückhaltevermögen für PVP K30: < 10 %
- nach Behandlung in Aceton:
  Rückhaltevermögen für PVP K30: < 20 %

Beispiel 5:

Für die Herstellung der in diesem Beispiel untersuchten Membran wurde in NMP als Lösemittel ein Copolyamid aus

(A') 100 mol % Terephthalsäuredichlorid,
(B') 35 mol % Paraphenylendiamin,
(B'') 35 mol % Metaphenylendiamin,
(D') 30 mol % 1,4-Bis(4'aminophenoxy)benzol

bei T = 70°C polykondensiert. Die Konzentration der Lösung betrug 15%. Zu 100g der Polyaramidlösung wurden 7,5 g des in Beispiel 1 beschriebenen sulfonierten Polyetherketons gegeben und bis zur Bildung einer klaren, homogenen

Lösung gerührt. Die Lösung wurde auf einem Polyethylenterephthalat-Trägervlies ausgestrichen und in Wasser bei 20°C koaguliert. Nach dem in Beispiel 1 beschriebenen Verfahren wurde eine hydraulische Permeabilität der Membran von 240 $l/m^2h$ sowie Rückhaltevermögen für PVP K30 von R = 98 %, für Dex. T40 von R = 92 % und für Dex. T10 von R = 76 % gemessen.

Vergleichsbeispiel 6:

Es wurde eine Membran aus der in Beispiel 4 präparierten Polyaramidlösung, jedoch ohne Zusatz von sulfoniertem Polyetherketon hergestellt, indem die Lösung auf einem Polyethylenterephthalat-Trägervlies ausgestrichen und dann in Wasser bei 20°C gefällt wurde. Gemäß Verfahren aus Beispiel 1 ergab sich folgende Trennleistung der Membran:

- hydraulische Permeabilität: 110 $l/m^2h$
- Rückhaltevermögen für PVP K30 R = 97%
  für Dex. T40 R = 94%
  für Dex. T1O R = 84%

Beispiel 7:

Für die Herstellung der in diesem Beispiel untersuchten Membran wurde in NMP als Lösemittel ein Copolyamid aus

(A') 100 mol% Terephthalsäuredichlorid
(B') 40 mol% Paraphenylendiamin
(B'') 20 mol% Metaphenylendiamin
(D') 40 mol% 1 ,4-Bis(4-aminophenoxy)benzol

bei T = 70°C polykondensiert. Die Konzentration der Lösung betrug c = 12 %. Zu 100 g der Polyaramidlösung wurden 6 g des in Beispiel 1 beschriebenen sulfonierten Polyetherketons gegeben und bis zur Bildung einer klaren homogenen Lösung der Legierung gerührt. Die Lösung wurde auf einem Polypropylen-Trägervlies ausgestrichen und in Wasser bei 20°C koaguliert. Gemäß Beispiel 1 wurde eine hydraulische Permeabilität von 620 $l/m^2h$ sowie ein quantitativer ($\geq$ 99 %) Rückhalt für Rinderalbumin (BSA) gemessen. Eine Probe der Membran wurde 24 h lang bei Zimmertemperatur unter einer Rinderalbumin-Probelösung aufbewahrt und dann erneut charakterisiert. Es wurde ein quantitativer Rückhalt für BSA festgestellt. Die hydraulische Permeabilität der gefoulten Membran betrug 450 $l/m^2h$, also 73 % des Wertes der nativen Membran.

Vergleichsbeispiel 8:

Aus der in Beispiel 6 präparierten Polyaramidlösung wurde ganz analog eine Membran hergestellt, jedoch ohne den Zusatz von sulfoniertem Polyetherketon als Legierungskomponente. Es wurde eine hydraulische Permeabilität von 450 $l/m^2h$ bestimmt, der Rückhalt für Rinderalbumin (BSA) war ebenfalls quantitativ. Eine Probe der Membran wurde 24 h lang bei Zimmertemperatur unter einer Rinderalbumin-Probelösung aufbewahrt. Die anschließende Charakterisierung ergab einen quantitativen Rückhalt für BSA. Die hydraulische Permeabilität hatte auf 190 $l/m^2h$, also auf 42 % des Ausgangswertes der nativen Membran abgenommen.

Beispiel 9:

Für die Herstellung der in diesem Beispiel untersuchten Membran wurde in NMP als Lösemittel ein Copolyamid aus

(A') 100 mol% Terephthalsäuredichlorid
(B') 50 mol% Paraphenylendiamin
(D') 25 mol% 3,4'-Diaminodiphenylether
(D'') 25 mol% 1,4-Bis(4-aminophenoxy)benzol

bei T = 70°C polykondensiert. Die Konzentration der Lösung betrug c = 6 %. In 100 g der Polyaramidlösung wurden nacheinander 3 g Polyvinylpyrrolidon PVP K30 und 3 g des in Beispiel 1 beschriebenen sulfonierten Polyetherketons eingerührt. Es entstand eine hochviskose, aber klare Lösung der ternären Polymerlegierung. Die Lösung wurde auf einem Polypropylen-Trägervlies in einer Schichtdicke von 250 µm ausgestrichen und in Wasser bei 18°C koaguliert.

Nach der in Beispiel 1 beschriebenen Methode wurde für diese Membran eine hydraulische Permeabilität von 1000 $l/m^2h$ bestimmt. Der Rückhaltewert für PVP K30 betrug R = 80 %. Eine Probe der Membran wurde 10 min lang bei 97°C in Wasser behandelt. Die Membran wies nun eine hydraulische Permeabilität von 800 $l/m^2h$ auf und hielt PVP zu 91 % zurück.

Beispiel 10:

Für die Herstellung der in diesem Beispiel untersuchten Membran wurde in NMP als Lösemittel ein Copolyamid aus

(A') 100 mol% Terephthalsäuredichlorid,
(B') 50 mol% Paraphenylendiamin,
(B'') 37,5 mol% Metaphenylendiamin,
(D') 12,5 mol% 1,4-Bis(4'-aminophenoxy)-benzol

bei T = 70°C polykondensiert. Die Konzentration der Lösung betrug c = 10%. In 100 g der Lösung wurden 5 g des in Beispiel 1 beschriebenen sulfonierten Polyetherketons eingerührt. Die hochviskose, klare Lösung wurde auf einem Polypropylen-Trägervlies in einer Schichtdicke von 200 µm ausgestrichen und in Wasser bei 22°C gefällt. Gemäß Beispiel 1 wurden für diese Membran eine hydraulische Permeabilität von 130 $l/m^2h$ sowie ein Rückhaltevermögen für Dex. T10 von R = 32%, für Dex. T40 von R = 97% und für PVP K30 von R = 97% bestimmt. Die Membran zeigte in diesen Experimenten keinen Rückhalt für niedermolekulare Testsubstanzen (MW < 200g/mol).
Eine Probe der Membran wurde 10 Minuten lang in einer Wasser:NMP (50:50)-Mischung bei 96°C behandelt. Die Charakterisierung erfolgte nun im Unterschied zu Beispiel 1 bei einem Druck von p = 15 bar. Es wurde eine hydraulische Permeabilität von 105 $l/m^2h$ bestimmt. Das Rückhaltevermögen betrug für NaCl R = 26% und für $Na_2SO_4$ R = 82%. Der Rückhalt für Dex. T10 war quantitativ (R≥ 99,5%).

**Patentansprüche**

1. Semipermeable Membran aus einer homogenen Polymerlegierung, die als Hauptbestandteile sulfonierte, aromatische Polyetherketone und mindestens ein vollaromatisches Polyamid enthält.

2. Membran gemäß Anspruch 1, dadurch gekennzeichnet, daß die Polymerlegierung aus einem sulfonierten, aromatischen Polyetherketon und einem vollaromatischen Polyamid besteht.

3. Membran gemäß Anspruch 1, dadurch gekennzeichnet, daß die Polymerlegierung noch Poly-N-vinyl-2-pyrrolidon enthält.

4. Membran gemäß Anspruch 3, dadurch gekennzeichnet, daß die Polymerlegierung neben Poly-N-vinyl-2-pyrrolidon noch ein Copolymerisat aus N-Vinyl-2-pyrrolidon und Vinylacetat enthält.

5. Membran gemäß Anspruch 1, dadurch gekennzeichnet, daß die Polymerlegierung noch ein Copolymerisat aus N-Vinyl-2-pyrrolidon und Vinylacetat enthält.

6. Membran gemäß Anspruch 2, dadurch gekennzeichnet, daß die Polymerlegierung 1 bis 99 Gew.-% mindestens eines sulfonierten, aromatischen Polyetherketons und 1 bis 99 Gew.-% eines vollaromatischen Polyamids enthält, wobei sich die Prozentangaben auf die Summe der Bestandteile (sulfoniertes, aromatisches Polyetherketon + aromatisches Polyamid) beziehen.

7. Membran gemäß Anspruch 3, 4 oder 5, dadurch gekennzeichnet, daß die Polymerlegierung 5 bis 60 Gew.-% mindestens eines sulfonierten, aromatischen Polyetherketons und 30 bis 90 Gew.-% mindestens eines vollaromatischen Polyamids enthält.

8. Membran gemäß Anspruch 7, dadurch gekennzeichnet, daß die Polymerlegierung 15 bis 50 Gew.-% mindestens eines sulfonierten, aromatischen Polyetherketons und 40 bis 75 Gew.-% mindestens eines vollaromatischen Polyamids enthält.

9. Membran gemäß Anspruch 7 oder 8, dadurch gekennzeichnet, daß die Polymerlegierung 0,1 bis 30 Gew.-% Poly-N-vinyl-2-pyrrolidon und/oder mindestens eines Copolymerisates aus N-Vinyl-2-pyrrolidon und Vinylacetat enthält.

**10.** Membran gemäß Anspruch 1 oder 2, dadurch gekennzeichnet, daß die Polymerlegierung mindestens ein sulfoniertes, aromatisches Polyetherketon mit der allgemeinen Formel I,

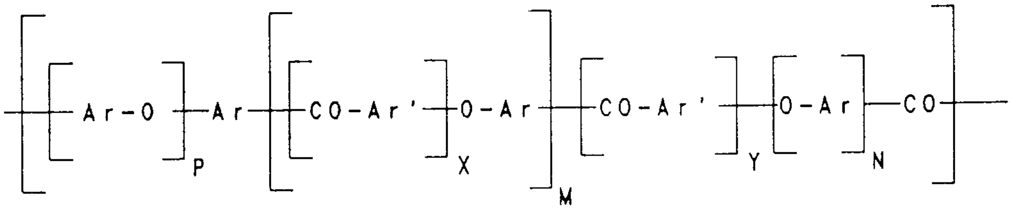
(I)

enthält, wobei

| | |
|---|---|
| -Ar- | einen Phenylenring mit para- und/oder meta-Bindungen, |
| -Ar'- | einen Phenylen-, Naphthylen-, Biphenylen-, Anthrylen- oder eine andere zweiwertige aromatische Einheit, |
| X, M und N | unabhängig voneinander Null oder 1, |
| Y | Null, 1, 2 oder 3, |
| p | 1, 2, 3 oder 4, |

bedeuten und wobei in der allgemeinen Formel I mindestens 20 % und maximal 100% der O-Phenylen-O-Einheiten mit einer $SO_3H$-Gruppe substituiert sind, vorausgesetzt, daß X, M, N und Y nicht gleichzeitig Null sind, wenn p = 1.

**11.** Membran nach Anspruch 1 oder 2, dadurch gekennzeichnet, daß die Polymerlegierung mindestens ein sulfoniertes, aromatisches Polyetherketon der allgemeinen Formel II,

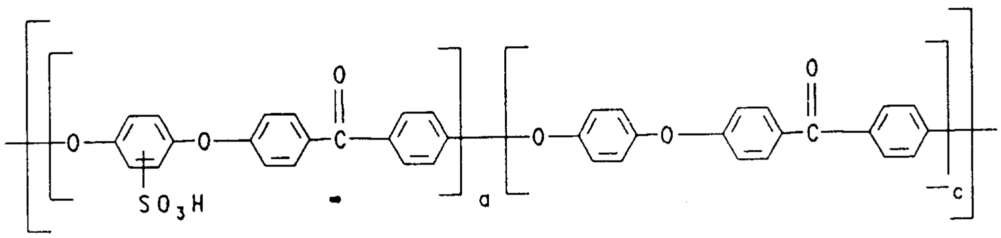
(II)

wobei a eine Zahl von 0,2 bis 1, c eine Zahl von 0 bis 0,8 bedeutet und die Summe a + c = 1 beträgt, der allgemeinen Formel III

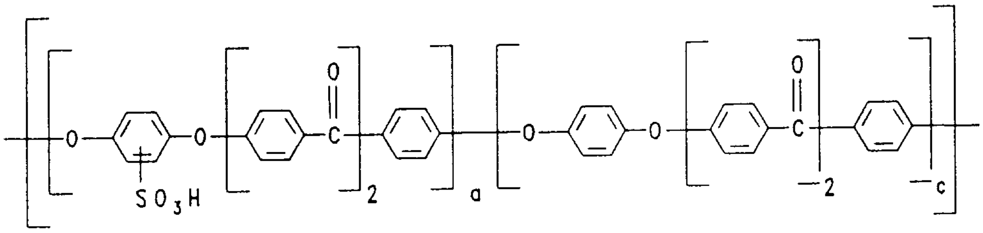
(III)

wobei a eine Zahl von 0,2 bis 1, c eine Zahl von 0 bis 0,8 bedeutet und die Summe a + c = 1 beträgt, oder der allgemeinen Formel IV

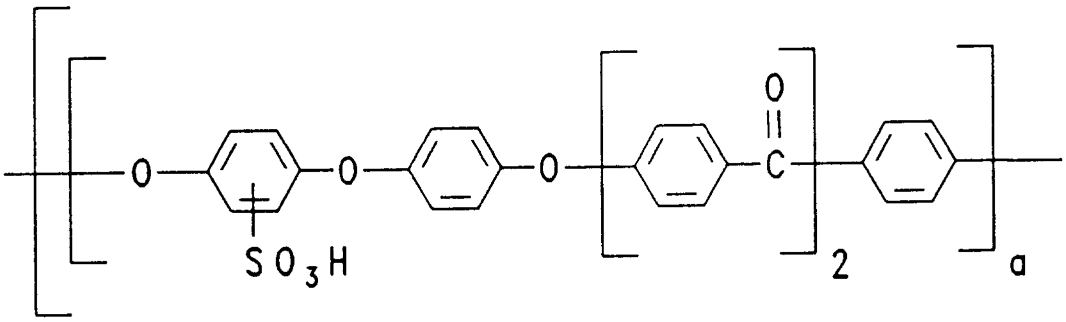

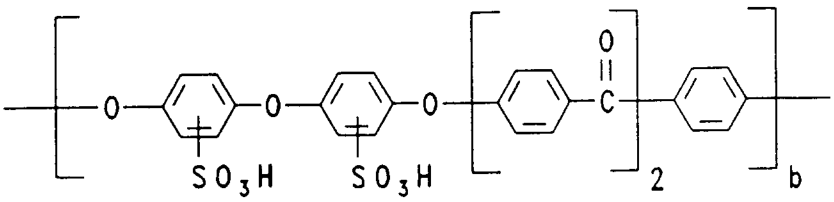

( I V )

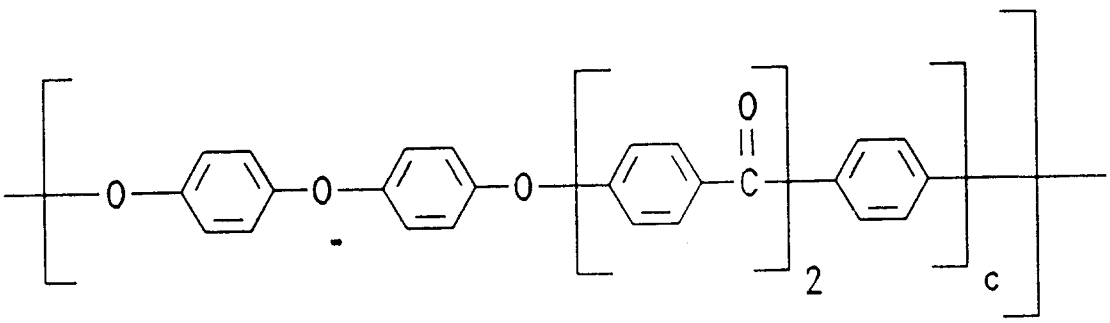

wobei a eine Zahl von 0 bis 1, b eine Zahl von 0 bis 1, c eine Zahl von 0 bis 0,5 bedeutet, und die Summe a + b + c = 1 beträgt, enthält.

**12.** Membran nach Anspruch 1 oder 2, dadurch gekennzeichnet, daß für die sulfonierten, aromatischen Polyetherketone sulfonierte Copolymere, die aus mindestens zwei unterschiedlichen Wiederholeinheiten der allgemeinen Formeln II, III und IV aufgebaut sind, eingesetzt werden.

**13.** Membran nach Anspruch 1 oder 2, dadurch gekennzeichnet, daß die sulfonierten, aromatischen Polyetherketone Molmassen besitzen, die, angegeben als Gewichtsmittel, im Bereich von 10000 bis 60000 g/mol liegen.

**14.** Membran nach Anspruch 1 oder 2, dadurch gekennzeichnet, daß die Polymerlegierung mindestens ein vollaromatisches Copolyamid enthält, das Struktureinheiten der allgemeinen Formel V

$$HN\text{-}Ar^2\text{-}Z^1\text{-}Ar^3(Z^2\text{-}Ar^3\text{-}Z^3\text{-}Ar^2\text{-})_n\text{-}NH\text{-}OC\text{-}Ar^1\text{-}CO \qquad (V)$$

aufweist, wobei

-$Ar^1$- einen 1 ,4-Phenylen- oder einen anderen zweiwertigen ($C_6$-$C_{12}$)-aromatischen oder heteroaromatischen, gegebenenfalls Sulfonsäuregruppen oder Etherbrücken enthaltenden

Rest, der gegebenenfalls mit einem oder zwei verzweigten oder unverzweigten $C_1$ -$C_4$-Alkyl- oder -Alkoxyresten oder mit einem oder mehreren Halogenatomen substituiert ist, bedeutet,

-$Ar^2$- und -$Ar^3$- für gleiche oder verschiedene 1,2-Phenylen-, 1,3-Phenylen- oder 1 ,4-Phenylenreste, die gegebenenfalls mit einem oder zwei verzweigten oder unverzweigten $C_1$-$C_4$-Alkyl- oder Alkoxyresten oder mit einem oder mehreren Halogenatomen substituiert sind, stehen,

-$Z^1$ -, -$Z^2$- und -$Z^3$- unabhängig voneinander eine direkte Bindung oder einen der folgenden zweiwertigen Reste -O-, -$C(CH_3)_2$-, -$C(CF_3)_2$-, $SO_2$ oder -O-$Ar^2$-O- bedeuten, wobei $Z^1$ auch die Bedeutung

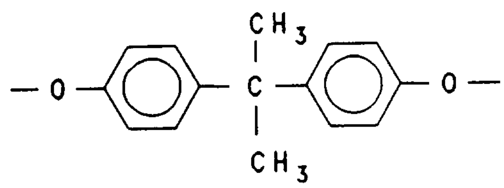

haben kann, und -$Ar^2$- die vorstehend genannte Bedeutung hat,

n ein ganze Zahl, insbesondere n = 0, 1 oder 2, ist.

**15.** Membran nach Anspruch 14, dadurch gekennzeichnet, daß die Polymerlegierung mindestens ein vollaromatisches Copolyamid mit der Struktureinheit

(A) -OC-$Ar^1$ -CO -
sowie drei verschiedenen Struktureinheiten der Formeln
(B) -NH-$Ar^2$-NH- und
(D) -NH-$Ar^2$-$Z^1$-$Ar^3$-NH-

aufweist, wobei jeweils mindestens eine Struktureinheit B und D vorhanden ist und $Ar^2$ in B und D eine unterschiedliche Bedeutung haben kann, und $Ar^1$, $Ar^2$, $Ar^3$ und $Z^1$ die in Anspruch 14 aufgeführten Bedeutungen haben.

**16.** Membran nach Anspruch 15, dadurch gekennzeichnet, daß -$Ar^1$ - in den Struktureinheiten A für

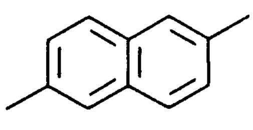 , 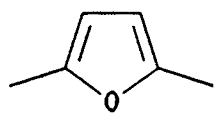 ,

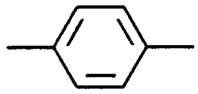 und 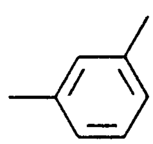

steht.

**17.** Membran nach Anspruch 15, dadurch gekennzeichnet, daß in den Struktureinheiten D der vollaromatischen Copolyamide der Rest -$Ar^2$-$Z^1$-$Ar^3$-ausgewählt wird aus

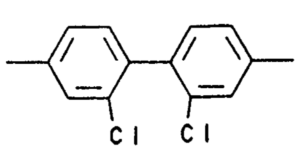 , 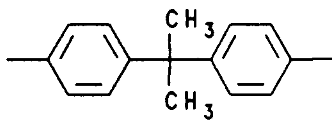 , 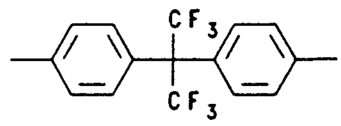 ,

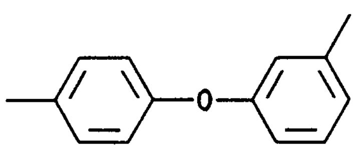 , 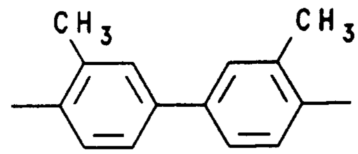 ,

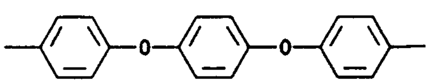 und 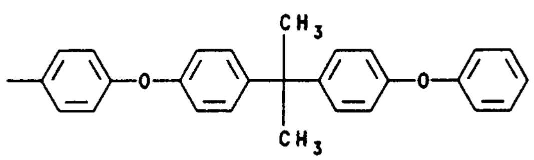 .

**18.** Membran nach Anspruch 15, dadurch gekennzeichnet, daß in dem vollaromatischen Copolyamid die Struktureinheiten A, B und D in den Molverhältnissen B/A = 0,3 - 0,9, D/A = 0,1 - 0,7 und (B + D)/A = 0,9 bis 1,1 vorliegen.

**19.** Membran nach Anspruch 14, dadurch gekennzeichnet, daß die inhärente Viskosität bei den als Legierungskomponenten verwendeten Copolyamiden zwischen 50 und 1000 $cm^3/g$ bestimmt in 96 %iger Schwefelsäure bei 25°C, beträgt.

**20.** Membran nach Anspruch 3, dadurch gekennzeichnet, daß das Molekulargewicht des Polyvinylpyrrolidons, angegeben als Gewichtsmittel, im Bereich von 1000 bis 3 Millionen liegt.

**21.** Membran nach Anspruch 20, dadurch gekennzeichnet, daß das Molekulargewicht des Polyvinylpyrrolidons, angegeben als Gewichtsmittel, im Bereich von 20 000 bis 200 000 liegt.

**22.** Membran nach Anspruch 20, dadurch gekennzeichnet, daß das Molekulargewicht des Polyvinylpyrrolidons, angegeben als Gewichtsmittel, im Bereich von 40 000 bis 100 000 liegt.

**23.** Membran nach mindestens einem der Ansprüche 1 bis 22, dadurch gekennzeichnet, daß sie auf einer für strömungsfähige Medien durchlässigen Schicht aus Kunststoffvlies oder aus Papier angeordnet ist.

**24.** Membran nach mindestens einem der Ansprüche 1 bis 22, dadurch gekennzeichnet, daß sie eine Hohlfasermembran ist.

**25.** Verfahren zur Veränderung des Rückhaltevermögens einer Membran nach mindestens einem der Ansprüche 1 bis 22, dadurch gekennzeichnet, daß man die ausgefällte Membran, bei der praktisch das gesamte Lösungsmittel durch Fällflüssigkeit ersetzt ist, einer Wärmebehandlung in einer Flüssigkeit unterzieht.

**26.** Verfahren nach Anspruch 25, dadurch gekennzeichnet, daß die Flüssigkeit Wasser, ein ein- oder mehrwertiger Alkohol oder ein aprotisches Lösungsmittel von Amidtyp oder ein Gemisch dieser Flüssigkeiten ist und die Wärmebehandlung bei Temperaturen im Bereich von 60 bis 140°C durchgeführt wird.

**27.** Verfahren zur Herstellung einer Membran nach mindestens einem der Ansprüche 1 bis 22, dadurch gekennzeichnet, daß man eine Polymerisatlösung enthaltend mindestens ein sulfoniertes, aromatisches Polyetherketon und mindestens ein Polyaramid oder mindestens ein sulfoniertes, aromatisches Polyetherketon, mindestens ein Polyaramid und Polyvinylpyrrolidon und/oder CoPVPAc sowie ein aprotisches, organisches Lösemittel auf eine

plane Unterlage als flüssige Schicht ausbreitet und diese in einen Überschuß einer Fällflüssigkeit eintaucht, die mit dem Lösemittel der Polymerisatlösung mischbar ist, in der aber die in der Polymerisatlösung gelösten Polymer-Anteile nicht löslich sind, so daß sich eine gefällte Membran ausbildet, man die Membran von der flüssigen Phase abtrennt und mit frischer Fällflüssigkeit wäscht.

**28.** Verfahren nach Anspruch 27, dadurch gekennzeichnet, daß als Fällflüssigkeit Wasser, ein- oder mehrwertige Alkohole, Mischungen dieser Substanzen untereinander oder mit aprotischen, polaren Lösemitteln eingesetzt werden.

**29.** Verfahren gemäß Anspruch 27, dadurch gekennzeichnet, daß man die gewaschene Membran trocknet.

**30.** Verfahren gemäß Anspruch 27 oder 28, dadurch gekennzeichnet, daß die gewaschene Membran vor dem Trocknen mit einem Weichmacher imprägniert wird, der mit der Fällflüssigkeit mischbar ist und die Membran benetzt.

**31.** Verfahren gemäß Anspruch 30, dadurch gekennzeichnet, daß die mit dem Weichmacher imprägnierte Membran bei einer Temperatur im Bereich von 30 bis 80°C getrocknet wird.

**32.** Verfahren gemäß den Ansprüchen 30 oder 31, dadurch gekennzeichnet, daß als Weichmacher Glycerin verwendet wird.

**33.** Verfahren nach Anspruch 28, dadurch gekennzeichnet, daß als Alkohole Methanol, Ethanol, Isopropanol, Ethylenglykol oder Glycerin und als aprotisch polare Lösemittel N,N-Dimethylformamid, N,N-Dimethyldiacetamid, Dimethylsulfoxid oder N-Methyl-2-pyrrolidon verwendet werden.

## Claims

**1.** A semipermeable membrane of a homogeneous polymer alloy which comprises a sulfonated, aromatic polyether ketone and at least one completely aromatic polyamide as the main constituents.

**2.** A membrane as claimed in claim 1, wherein the polymer alloy consists of a sulfonated, aromatic polyether ketone and a completely aromatic polyamide.

**3.** A membrane as claimed in claim 1, wherein the polymer alloy also comprises poly-N-vinyl-2-pyrrolidone.

**4.** A membrane as claimed in claim 3, wherein the polymer alloy also comprises a copolymer of N-vinyl-2-pyrrolidone and vinyl acetate, in addition to poly-N-vinyl-2-pyrrolidone.

**5.** A membrane as claimed in claim 1, wherein the polymer alloy also comprises a copolymer of N-vinyl-2-pyrrolidone and vinyl acetate.

**6.** A membrane as claimed in claim 2, wherein the polymer alloy comprises 1 to 99% by weight of at least one sulfonated, aromatic polyether ketone and 1 to 99% by weight of a completely aromatic polyamide, the percentage data relating to the sum of the constituents (sulfonated, aromatic polyether ketone + aromatic polyamide).

**7.** A membrane as claimed in claim 3, 4 or 5, wherein the polymer alloy comprises 5 to 60% by weight of at least one sulfonated, aromatic polyether ketone and 30 to 90% by weight of at least one completely aromatic polyamide.

**8.** A membrane as claimed in claim 7, wherein the polymer alloy comprises 15 to 50% by weight of at least one sulfonated, aromatic polyether ketone and 40 to 75% by weight of at least one completely aromatic polyamide.

**9.** A membrane as claimed in claim 7 or 8, wherein the polymer alloy comprises 0.1 to 30% by weight of poly-N-vinyl-2-pyrrolidone and/or of at least one copolymer of N-vinyl-2-pyrrolidone and vinyl acetate.

**10.** A membrane as claimed in claim 1 or 2, wherein the polymer alloy comprises at least one sulfonated, aromatic polyether ketone of the formula I

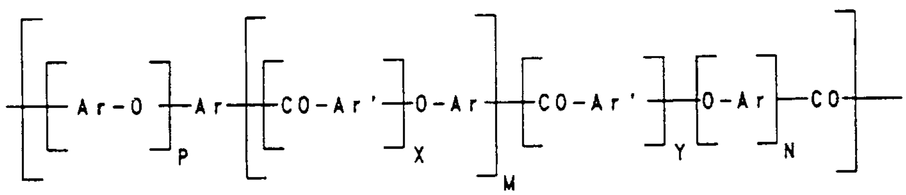 (I)

in which

| | |
|---|---|
| -Ar- | is a phenylne ring with para and/or meta bonds, |
| -Ar'- | is a phenylene, naphthylene, biphenylene or anthrylene unit or another divalent aromatic unit, |
| X, M and N | independently of one another are zero or 1, |
| Y | is zero, 1, 2 or 3, |
| p | is 1, 2, 3 or 4, |

and in which, in the formula I, at least 20% and not more than 100% of the O-phenylene-O units are substituted by an $SO_3H$ group, with the proviso that X, M, N, and Y are not simultaneously zero when p = 1.

**11.** A membrane as claimed in claim 1 or 2, wherein the polymer alloy comprises at least one sulfonated, aromatic polyether ketone of the formula II

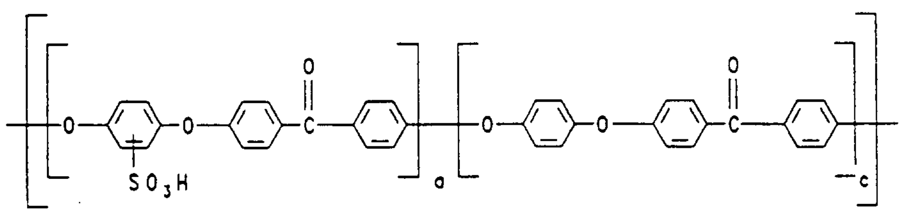 (II)

in which a is a number from 0.2 to 1, c is a number from 0 to 0.8 and the sum of $a + c = 1$, of the formula III

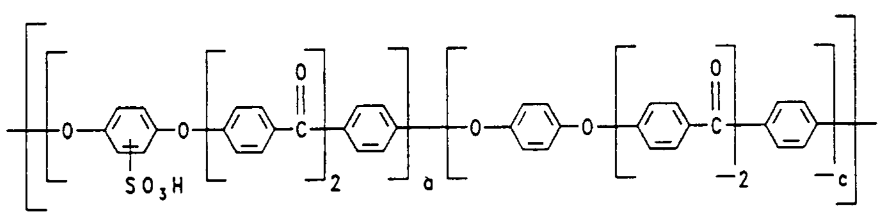 (III)

in which a is a number from 0.2 to 1, c is a number from 0 to 0.8 and the sum of $a + c = 1$, or of the formula IV

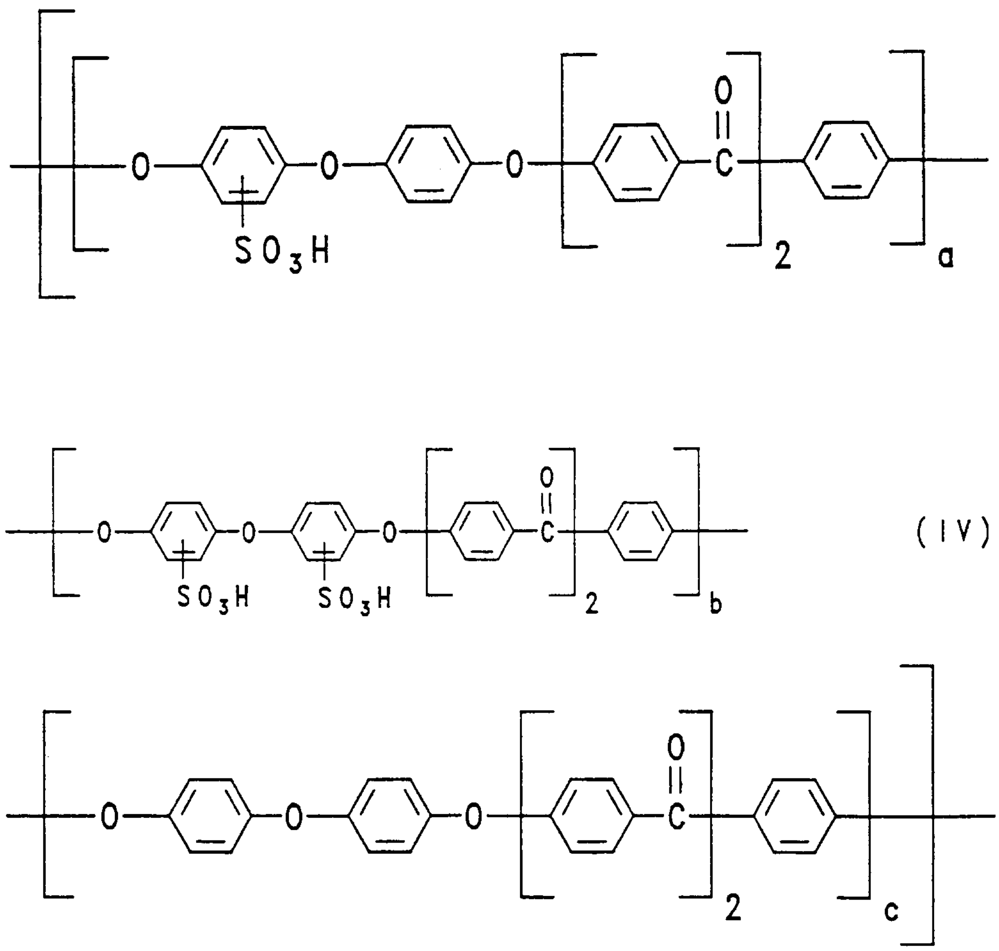

(IV)

in which a is a number from 0 to 1, b is a number from 0 to 1, c is a number from 0 to 0.5 and the sum of $a + b + c = 1$.

12. A membrane as claimed in claim 1 or 2, wherein a sulfonated copolymer which is built up from at least two different recurring units of the formulae II, III and IV is employed for the sulfonated, aromatic polyether ketone.

13. A membrane as claimed in claim 1 or 2, wherein the sulfonated, aromatic polyether ketone has a molecular weight which, stated as the weight-average, is in the range from 10,000 to 60,000 g/mol.

14. A membrane as claimed in claim 1 or 2, wherein the polymer alloy comprises at least one completely aromatic copolyamide which contains structural units of the formula V

$$HN\text{-}Ar^2\text{-}Z^1\text{-}Ar^3(Z^2\text{-}Ar^3\text{-}Z^3\text{-}Ar^2\text{-})_n\text{-}NH\text{-}OC\text{-}Ar^1\text{-}CO \qquad (V)$$

in which

| | |
|---|---|
| $-Ar^1-$ | is a 1,4-phenylene radical or another divalent ($C_6$-$C_{12}$)-aromatic or -heteroaromatic radical optionally containing sulfonic acid groups or ether bridges, which is optionally substituted by one or two branched or unbranched $C_1$-$C_4$-alkyl or -alkoxy radicals or by one or more halogen atoms, |
| $-Ar^2-$ and $-Ar^3-$ | are identical or different 1,2-phenylene, 1,3-phenylene or 1,4-phenylene radicals, which are optionally substituted by one or two branched or unbranched $C_1$-$C_4$-alkyl or -alkoxy radicals |

or by one or more halogen atoms,

$-Z^1-$, $-Z^2-$ and $-Z^3-$ independently of one another are a direct bond or one of the following divalent radicals -O-, $-C(CH_3)_2-$, $-C(CF_3)_2-$, $SO_2$ or $-O-Ar^2-O-$, in which $Z^1$ can also have the meaning

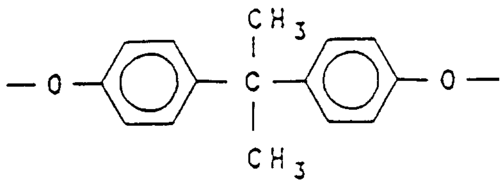,

and $-Ar^2-$ has the abovementioned meaning,

n is an integer, in particular n = 0, 1 or 2.

**15.** A membrane as claimed in claim 14, wherein the polymer alloy contains at least one completely aromatic copolyamide with the structural unit

(A) $-OC-Ar^1-CO-$
and three different structural units of the formulae
(B) $-NH-Ar^2-NH-$ and
(D) $-NH-Ar^2-Z^1-Ar^3-NH-$

in which in each case at least one structural unit B and D is present and $Ar^2$ in B and D can have a different meaning, and $Ar^1$, $Ar^2$, $Ar^3$ and $Z^1$ have the meanings given in claim 14.

**16.** A membrane as claimed in claim 15, wherein $-Ar^1-$ in the structural units A is

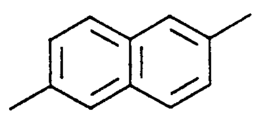, 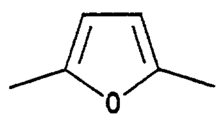,

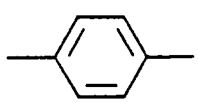 and 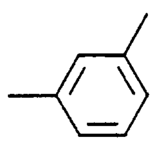.

**17.** A membrane as claimed in claim 15, wherein, in the structural units D of the completely aromatic copolyamide, the radical $-Ar^2-Z^1-Ar^3-$ is chosen from

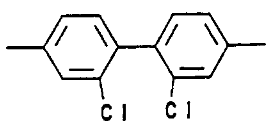 , 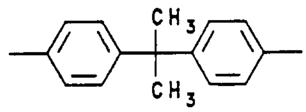 , 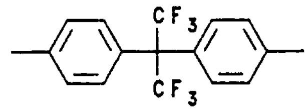 ,

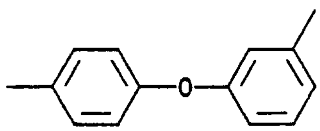 , 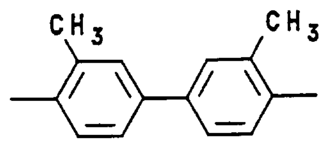 ,

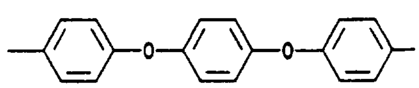 and 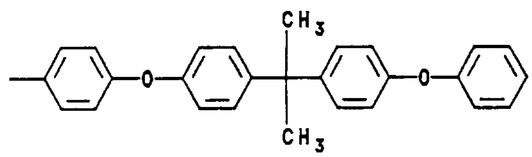 .

**18.** A membrane as claimed in claim 15, wherein, in the completely aromatic copolyamide, the structural units A, B and D are present in the molar ratios of B/A = 0.3 - 0.9 , D/A = 0.1 - 0.7 and (B + D)/A = 0.9 to 1.1 .

**19.** A membrane as claimed in claim 14, wherein the intrinsic viscosity of the copolyamide used as alloy component is between 50 and 1000 $cm^3/g$, determined in 96% strength sulfuric acid at 25°C.

**20.** A membrane as claimed in claim 3, wherein the molecular weight of the polyvinylpyrrolidone, stated as the weight-average, is in the range from 1000 to 3 million.

**21.** A membrane as claimed in claim 20, wherein the molecular weight of the polyvinylpyrrolidone, stated as the weight-average, is in the range from 20,000 to 200,000.

**22.** A membrane as claimed in claim 20, wherein the molecular weight of the polyvinylpyrrolidone, stated as the weight-average, is in the range from 40,000 to 100,000.

**23.** A membrane as claimed in at least one of claims 1 to 22, which is located on a layer of nonwoven plastic or of paper, which is permeable to media which are capable of flow.

**24.** A membrane as claimed in at least one of claims 1 to 22, which is a hollow fiber membrane.

**25.** A process for modifying the retention capacity of a membrane as claimed in at least one of claims 1 to 22, which comprises subjecting the precipitated membrane, in which practically all the solvent is replaced by precipitating liquid, to heat treatment in a liquid.

**26.** The process as claimed in claim 25, wherein the liquid is water, a mono- or polyhydric alcohol or an aprotic solvent of the amide type or a mixture of these liquids and the heat treatment is carried out at temperatures in the range from 60 to 140°C.

**27.** A process for the preparation of a membrane as claimed in at least one of claims 1 to 22, which comprises spreading a polymer solution comprising at least one sulfonated, aromatic polyether ketone and at least one polyaramide or at least one sulfonated, aromatic polyether ketone, at least one polyaramide and polyvinylpyrrolidone and/or CoPVPAc and an aprotic, organic solvent as a liquid layer onto a flat substrate, immersing this in an excess of a

precipitating liquid which is miscible with the solvent of the polymer solution but in which the polymer contents dissolved in the polymer solution are not soluble, so that a precipitated membrane forms, and separating off the membrane from the liquid phase and washing it with fresh precipitating liquid.

**28.** The process as claimed in claim 27, wherein water, a mono- or polyhydric alcohol or a mixture of these substances with one another or with an aprotic, polar solvent is employed as the precipitating liquid.

**29.** The process as claimed in claim 27, wherein the washed membrane is dried.

**30.** The process as claimed in claim 27 or 28, wherein, before drying, the washed membrane is impregnated with a plasticizer which is miscible with the precipitating liquid and wets the membrane.

**31.** The process as claimed in claim 30, wherein the membrane impregnated with the plasticizer is dried at a temperature in the range from 30 to 80°C.

**32.** The process as claimed in claims 30 or 31, wherein glycerol is used as the plasticizer.

**33.** The process as claimed in claim 28, wherein methanol, ethanol, isopropanol, ethylene glycol or glycerol is used as the alcohol and N,N-dimethylformamide, N,N-dimethyl diacetamide, dimethyl sulfoxide or N-methyl-2-pyrrolidone is used as the aprotic polar solvent.

**Revendications**

**1.** Membrane semi-perméable à base d'un alliage homogène de polymères, qui contient, en tant que composants principaux, des polyéthercétones aromatiques sulfonées et au moins un polyamide totalement aromatique.

**2.** Membrane selon la revendication 1, caractérisée en ce que l'alliage de polymères consiste en une polyéthercétone aromatique sulfonée et un polyamide totalement aromatique.

**3.** Membrane selon la revendication 1, caractérisée en ce que l'alliage de polymères contient encore de la poly-N-vinyl-2-pyrrolidone.

**4.** Membrane selon la revendication 3, caractérisée en ce que l'alliage de polymères contient, en plus de poly-N-vinyl-2-pyrrolidone, encore un copolymère de N-vinyl-2-pyrrolidone et acétate de vinyle.

**5.** Membrane selon la revendication 1, caractérisée en ce que l'alliage de polymères contient encore un copolymère de N-vinyl-2-pyrrolidone et acétate de vinyle.

**6.** Membrane selon la revendication 2, caractérisée en ce que l'alliage de polymères contient de 1 à 99 % en poids d'au moins une polyéthercétone aromatique sulfonée et de 1 à 99 % en poids d'un polyamide totalement aromatique, -les pourcentages étant par rapport à la somme des composants (polyéthercétone aromatique sulfonée + polyamide aromatique).

**7.** Membrane selon la revendication 3, 4 ou 5, caractérisée en ce que l'alliage de polymères contient de 5 à 60 % en poids d'au moins une polyéthercétone aromatique sulfonée et de 30 à 90 % en poids d'au moins un polyamide totalement aromatique.

**8.** Membrane selon la revendication 7, caractérisée en ce que l'alliage de polymères contient de 15 à 50 % en poids d'au moins une polyéthercétone aromatique sulfonée et de 40 à 75 % en poids d'au moins un polyamide totalement aromatique.

**9.** Membrane selon la revendication 7 ou 8, caractérisée en ce que l'alliage de polymères contient de 0,1 à 30 % en poids de poly-N-vinyl-2-pyrrolidone et/ou au moins un copolymère de N-vinyl-2-pyrrolidone et acétate de vinyle.

**10.** Membrane selon la revendication 1 ou 2, caractérisée en ce que l'alliage de polymères contient au moins une polyéthercétone aromatique sulfonée de formule générale I

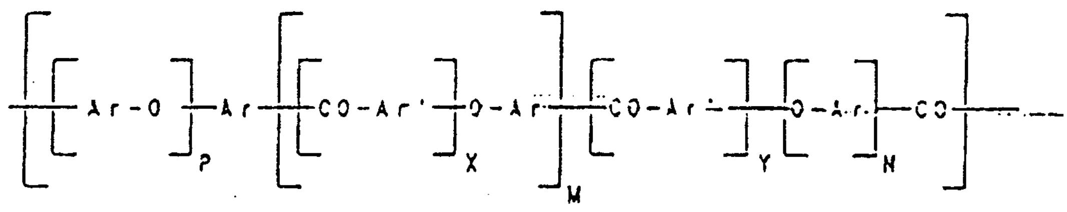

(I)

dans laquelle

| | |
|---|---|
| Ar | représente un cycle phényle à liaisons para et/ou méta, |
| Ar' | représente le groupe phénylène, naphtylène, biphénylène, anthrylène ou un autre groupe aromatique divalent, |
| X, M et N | représentent, indépendamment l'un de l'autre, zéro ou 1, |
| Y | est zéro, 1, 2 ou 3, |
| p | est 1, 2, 3 ou 4, |

et, dans la formule générale I, au moins 20 % et au maximum 100 % des groupes O-phénylène-O étant substitués par un groupe $SO_3H$, étant admis que X, M, N et Y ne sont pas simultanément zéro lorsque p = 1.

**11.** Membrane selon la revendication 1 ou 2, caractérisée en ce que l'alliage de polymères contient au moins une polyéthercétone aromatique sulfonée de formule générale II

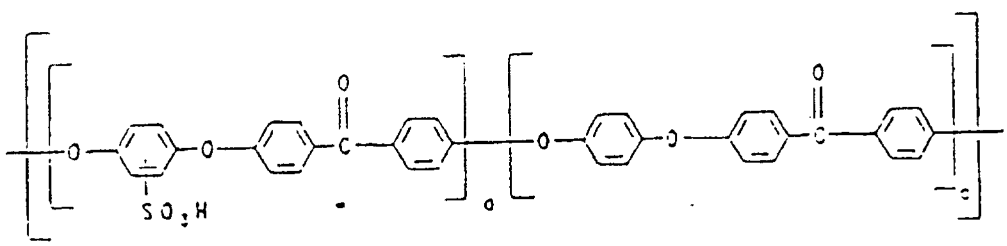

(II)

dans laquelle a représente un nombre allant de 0,2 à 1, c représente un nombre allant de 0 à 0,8 et la somme a + c = 1,
de formule générale III

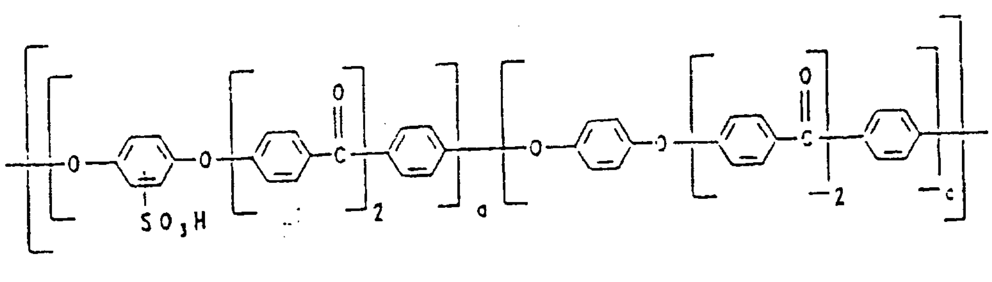

(III)

dans laquelle a représente un nombre allant de 0,2 à 1, c représente un nombre de 0 à 0,8 et la somme a + c = 1, et de formule générale IV

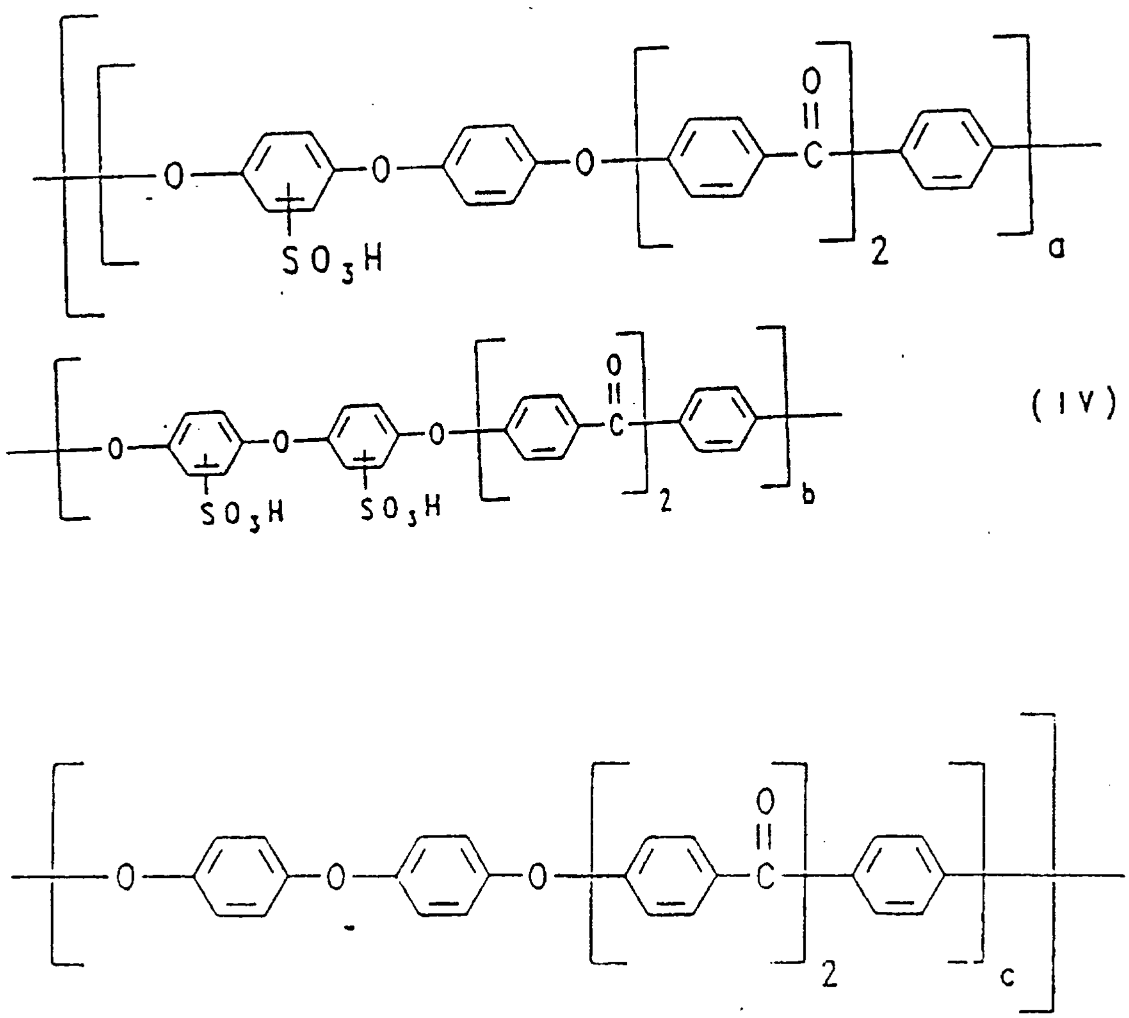

(IV)

dans laquelle a représente un nombre allant de 0 à 1, b représente un nombre allant de 0 à 1, c représente un nombre allant de 0 à 0,5, et la somme a + b + c = 1 .

12. Membrane selon la revendication 1 ou 2, caractérisée en ce que, pour les polyéthercétones aromatiques sulfonées, on utilise des copolymères sulfonés qui sont constitués d'au moins deux différents motifs répétitifs de formules générales I, III et IV.

13. Membrane selon la revendication 1 ou 2, caractérisée en ce que les polyéthercétones aromatiques sulfonées ont des masses moléculaires qui, indiquées en moyenne en poids, se situent dans la plage allant de 10 000 à 60 000 g/mole.

14. Membrane selon la revendication 1 ou 2, caractérisée en ce que l'alliage de polymères contient au moins un copolyamide totalement aromatique qui comporte des motifs de formule générale V

$$-HN-Ar^2-Z^1-Ar^3-(-Z^2-Ar^3-Z^3-Ar^2-)_n-NH-OC-Ar^1-CO- \quad (V)$$

dans laquelle

| | |
|---|---|
| $-Ar^1-$ | représente un radical 1,4-phénylène ou un autre radical aromatique ou hétéroaromatique en $C_6$-$C_{12}$ bivalent, contenant éventuellement des groupes sulfo ou des ponts éther, qui est éventuellement substitué par 1 ou 2 groupes alkyle ou alcoxy en $C_1$-$C_4$ ramifiés ou non ramifiés ou par un ou plusieurs atomes d'halogène, |
| $-Ar^2-$ et $-Ar^3-$ | représentent des radicaux 1,2-phénylène, 1,3-phénylène ou 1,4-phénylène identiques ou dif- |

férents, qui sont éventuellement substitués par un 1 ou 2 groupes alkyle en $C_1$-$C_4$ ou alcoxy en $C_1$-$C_4$ ramifiés ou non ramifiés, ou par un ou plusieurs atomes d'halogène,

-$Z^1$-, -$Z^2$- et -$Z^3$- représentent, indépendamment les uns des autres, une liaison directe ou l'un des radicaux bivalents suivants -O-, -$C(CH_3)_2$-, -$C(CF_3)_2$-, -$SO_2$- ou -O-$Ar^2$-O-, $Z^1$ pouvant également représenter

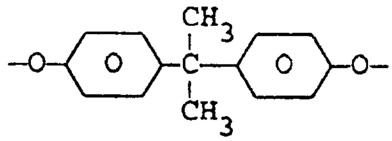,

et -$Ar^2$- ayant la signification donnée précédemment, et

n représente un nombre entier, en particulier n = 0, 1 ou 2.

**15.** Membrane selon la revendication 14, caractérisée en ce que l'alliage de polymères comporte au moins un copolyamide totalement aromatique présentant le motif

(A) -OC-$Ar^1$-CO-
ainsi que trois différents motifs de formules
(B) -NH-$Ar^2$-NH- et
(D) -HN-$Ar^2$-$Z^1$-$Ar^3$-NH-,

dans chaque cas au moins un motif B et un motif D étant présents, et $Ar^2$ pouvant avoir une signification différente dans B et D, et $Ar^1$, $Ar^2$, $Ar^3$ et $Z^1$ ayant les significations indiquées dans la revendication 14.

**16.** Membrane selon la revendication 15, caractérisée en ce que -$Ar^1$- dans les motifs A représente

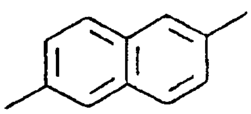 , 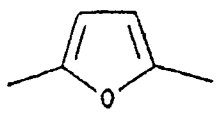 ,

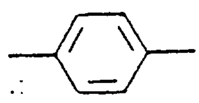 et 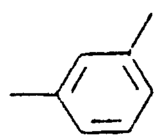

**17.** Membrane selon la revendication 15, caractérisée en ce que, dans les motifs D des copolyamides totalement aromatiques, le radical -$Ar^2$-$Z^1$-$Ar^3$- est choisi parmi

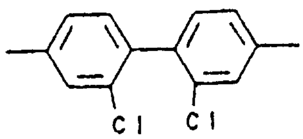 , 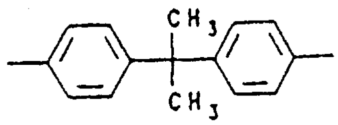 , 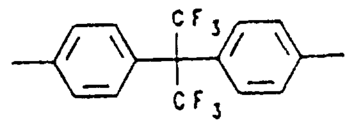 ,

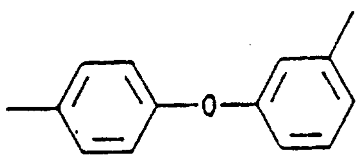 , 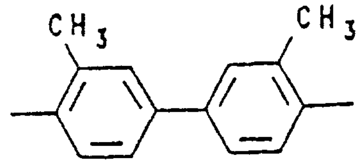 ;

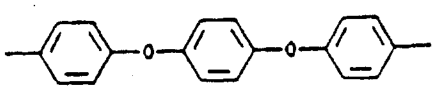 et 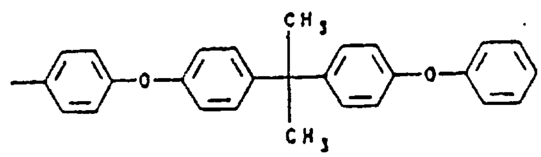 .

**18.** Membrane selon la revendication 15, caractérisée en ce que, dans le copolyamide totalement aromatique, les motifs A, B et D sont présents en les rapports molaires B/A = 0,3-0,9 , D/A = 0,1-0,7 et (B+D)/A = 0,9 à 1,1 .

**19.** Membrane selon la revendication 14, caractérisée en ce que la viscosité inhérente des copolyamides utilisés comme composants d'alliage est comprise entre 50 et 1 000 $cm^3/g$, déterminée dans de l'acide sulfurique à 96 %, à 25°C.

**20.** Membrane selon la revendication 3, caractérisée en ce que la masse moléculaire de la polyvinylpyrrolidone, indiquée en moyenne en poids, se situe dans la plage allant de 1 000 à 3 000 000.

**21.** Membrane selon la revendication 20, caractérisée en ce que la masse moléculaire de la polyvinylpyrrolidone, indiquée en moyenne en poids, se situe dans la plage allant de 20 000 à 200 000.

**22.** Membrane selon la revendication 20, caractérisée en ce que la masse moléculaire de la polyvinylpyrrolidone, indiquée en moyenne en poids, se situe dans la plage allant de 40 000 à 100 000.

**23.** Membrane selon au moins l'une des revendications 1 à 22, caractérisée en ce qu'elle est disposée sur une couche, perméable à des milieux aptes à l'écoulement, de papier ou de non-tissé synthétique.

**24.** Membrane selon au moins l'une des revendications 1 à 22, caractérisée en ce qu'elle est une membrane à fibres creuses.

**25.** Procédé pour la modification du taux de rétention d'une membrane selon au moins l'une des revendications 1 à 22, caractérisé en ce que l'on soumet à un traitement thermique dans un liquide la membrane précipitée, dans laquelle pratiquement la totalité du solvant est remplacée par du liquide de précipitation.

**26.** Procédé selon la revendication 25, caractérisé en ce que le liquide est l'eau, un alcool mono- ou polyhydroxylé ou un solvant aprotique de type amide, ou un mélange de ces liquides, et le traitement thermique est effectué à des températures dans la plage de 60 à 140°C.

**27.** Procédé pour la préparation d'une membrane selon au moins l'une des revendications 1 à 22, caractérisé en ce que l'on étale, sous forme de couche liquide, sur un support plan, une solution de polymères contenant au moins une polyéthercétone aromatique sulfonée et au moins un polyaramide, ou au moins une polyéthercétone aromatique sulfonée, au moins un polyaramide et de la polyvinylpyrrolidozle et/ou du CoPVPAc, ainsi qu'un solvant organique aprotique, et on l'immerge dans un excès d'un liquide de précipitation qui est miscible au solvant de la solution de polymères, mais dans lequel ne sont pas solubles les fractions de polymères dissoutes dans la solution de polymères, de sorte qu'il se forme une membrane précipitée, on sépare la membrane de la phase liquide et on la lave avec du liquide de précipitation neuf.

**28.** Procédé selon la revendication 27, caractérisé en ce que l'on utilise comme liquide de précipitation l'eau, des alcools mono- ou polyhydroxylés, des mélanges de ces substances entre elles ou avec des solvants polaires aprotiques.

**29.** procédé selon la revendication 27, caractérisé en ce que l'on sèche la membrane lavée.

**30.** Procédé selon la revendication 27 ou 28, caractérisé en ce que la membrane lavée est imprégnée, avant le séchage, avec un plastifiant qui est miscible au liquide de précipitation et mouille la membrane.

**31.** Procédé selon la revendication 30, caractérisé en ce que la membrane imprégnée avec le plastifiant est séchée à une température dans la plage allant de 30 à 80°C.

**32.** Procédé selon la revendication 30 ou 31, caractérisé en ce que l'on utilise comme plastifiant le glycérol.

**33.** Procédé selon la revendication 28, caractérisé en ce que l'on utilise comme alcools le méthanol, l'éthanol, l'isopropanol, l'éthylèneglycol ou le glycérol, et, comme solvant aprotique polaire, le N,N-diméthylformamide, le N,N-diméthyldiacétamide, le diméthylsulfoxyde ou la N-méthyl-2-pyrrolidone.